# EUROPEAN PATENT SPECIFICATION

(11) **EP 1 241 445 B1**
(45) Date of publication and mention of the grant of the patent: **17.04.2013**
(21) Application number: 02005512.5
(22) Date of filing: 11.03.2002
(51) Int. Cl.: G01C 21/36

(54) **3D Map and object displaying apparatus and method, and navigation apparatus employing the method**
3D Karten-und Objekdarstellungsvorrichtung und -verfahren, und Navigationsvorrichtung zur Verwendung derselben
Carte 3D, appareil et méthode de visualisation d'objet, et appareil de navigation employant la méthode

(30) Priority: 15.03.2001 JP 2001074615
(43) Date of publication of application: 18.09.2002
(73) Proprietor: Panasonic Corporation, Kadoma-shi Osaka 571-8501 (JP)
(72) Inventor: Yamashita, Atsushi, Osaka-shi, Osaka-fu (JP); Hamada, Hiroyuki, Yawata-shi, Kyoto-fu (JP); Sakamoto, Kiyomi, Ikomi-shi, Nara-ken (JP); Ata, Teruaki, Osaka-shi, Osaka-fu (JP); Hamada, Yuji, Tokyo-to (JP)
(74) Representative: Gassner, Wolfgang

(56) References cited:
- EP-A2- 0 738 876
- EP-A2- 0 841 537
- EP-A2- 0 897 170
- EP-A2- 1 085 299

## Description

### BACKGROUND OF THE INVENTION

### Field of the Invention

The present invention relates to a 3D (three-dimensional) displaying apparatus and method, and a navigation apparatus which employs the method. More particularly, the present invention relates to an apparatus and method for displaying navigation guidance signboards as superimposed images on a 3D map, and an apparatus for providing navigation which employs the method.

### Description of the Background Art

Conventional navigation apparatuses for displaying signboard images for navigation guidance purposes (hereinafter such signboard images will be referred to as "navigation guidance signboards") as superimposed images on a 3D map employ either one of the two methods described below.

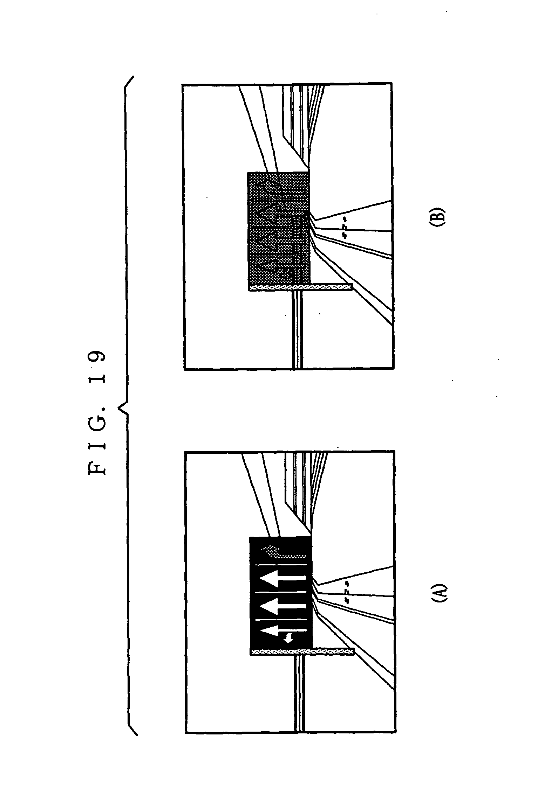

FIGS. 19A and 19B are illustrations of two methods for displaying a navigation guidance signboard as a superimposed image on a 3D map that are employed by conventional navigation apparatuses. FIG. 19A illustrates a method of displaying an opaque navigation guidance signboard as a superimposed image on a 3D map. FIG. 19B illustrates a method of displaying a translucent navigation guidance signboard as a superimposed image on a 3D map.

Both in FIGS. 19A and 19B, a 3D map is displayed on a display device, with a navigation guidance signboard being superimposed on the 3D map. The navigation guidance signboard illustrated in each figure is a lane guidance signboard including a plurality of arrows shown on a signboard, where the arrows respectively correspond to a plurality of lanes. Note that the rightmost arrow is displayed in a different color from the other arrows. This arrow is displayed in the different color to visually indicate a lane (or a direction) for a user (or a vehicle) to take as part of the navigation guidance.

A conventional navigation apparatus searches for an optimum route based on a current position of the user (vehicle) and on a destination location. As a result, a signboard (e.g., that shown in FIG. 19A or 19B) is displayed as a superimposed image on a 3D map, thereby providing navigation guidance to lead the user along the optimum route to the destination location. The user checks the 3D map as well as the navigation guidance indicated on the superimposed signboards to accordingly drive the vehicle, e.g., switches lanes and/or turns right or left, thereby eventually arriving at the destination location.

However, the method illustrated in FIG. 19A has a problem in that, although the opaque navigation guidance signboard itself is highly visible, the signboard may conceal the roads, streets or buildings ahead of the signboard (i.e., the roads, streets, or buildings on the 3D map that underlie the navigation guidance signboard) . As a result, it may be difficult for the user to drive the vehicle in accordance with the navigation guidance indicated on the signboard. For example, even if a navigation guidance signboard indicating a right turn is displayed as shown in FIG. 19A, the particular intersection on the 3D map at which to make the right turn may be concealed from view by the navigation guidance signboard. Therefore, the user may not be able to grasp the distance from the current position to the intersection, and may fail to turn right at the intersection as instructed by the navigation guidance.

On the other hand, the method illustrated in FIG. 19B, which displays a translucent navigation guidance signboard, allows the user to see through the signboard to the roads, streets, buildings, etc., lying ahead of the signboard. However, the signboard does not have a good definition. As a result, the user may not notice the navigation guidance given on the signboard at all, or may not be able to understand the navigation guidance being given on the signboard.

Thus, neither the method illustrated in FIG. 19A nor the method illustrated in FIG. 19B may serve to provide appropriate navigation guidance.

The aforementioned problems may arise not only when displaying a navigation guidance signboard superimposed on a 3D map for navigation purposes, but also in the case where a special structure and/or a road sign indicating a traffic regulation (e. g. , a "wrong way") are to be superimposed on a 3D map. As used herein, a "special structure" is defined as a structure (e.g., a building accommodating a bookstore, a convenience store, or the like; a gas station; or a parking lot) to be drawn other than the roads, streets, or buildings which are already present on the 3D map. In other words, if a special structure or a road sign is displayed as an opaque image, a portion of the 3D map may be concealed by the special structure or the road sign, thereby preventing some of the roads, streets, or buildings on the 3D map from being viewed. On the other hand, if a special structure or a road sign is displayed as a translucent image, it may become difficult to recognize what the special structure is (i.e., what business entity is accommodated in the structure) or what sort of traffic regulation is indicated on the road sign.

Such a conventional navigation apparatus is known from EP 1 085 299 A2. Therein, guiding images, such as navigation guiding signboards, road signs, and traffic lights, are displayed in an opaque manner. Auxiliary images corresponding to the guiding images, such as artificial shadows and leader lines, are displayed in an opaque manner, as well. A three-dimensional visualization of a building shielding a guiding image or an auxiliary image is omitted.

From EP 0 738 876 A2, a map display apparatus is known which realizes a perspective conversion for displaying two-dimensional map data in a bird's-eye view. The known map display apparatus can omit small roads and eliminate names that are displayed in superposition in with one another.

### SUMMARY OF THE INVENTION

An object of the present invention is to provide a 3D map and object displaying apparatus and method which is capable of displaying navigation guidance signboards, special structures, or road signs (all of which will be collectively referred to as "objects") as superimposed images on a 3D map in such a manner that information which is intended to be expressed by the object is clearly conveyed to a user, and yet the roads, streets, or buildings which are already present on the 3D map are prevented from being concealed by such objects; and a navigation apparatus which employs the method (where the "information" may be a direction to be taken by a user in the case where the object is a navigation guidance signboard; or, in the case where the object is a special structure, what the structure is or what sort of business entity is accommodated therein ; or, in the case where the object is a road sign, a traffic regulation such as a wrong way or a speed limit).

The present invention has the following features to attain the object above.

A first aspect of the present invention is directed to a three-dimensional map and object displaying apparatus for displaying an object for visually conveying predetermined information to a user as a superimposed image on a three-dimensional map, wherein the object includes a plurality of parts, the plurality of parts comprising a significant part and a non-significant part, wherein the three-dimensional map and object displaying apparatus comprises: storage means for storing drawing information and a predetermined transparency attribute for each part, the transparency attribute designating "opaque" or "non-opaque" in relation to a significance level of the part; map displaying means for displaying the three-dimensional map; and object displaying means for performing a drawing process based on the drawing information and the transparency attribute for each part stored in the storage means, thereby displaying an object as a superimposed image on the three-dimensional map being displayed by the map displaying means, such that the significant part appears as an opaque image and the non-significant part appears as a non-opaque image.

According to the first aspect, an object is displayed as a superimposed image on a 3D map such that the significant part thereof appears opaque and the non-significant part thereof appears non-opaque. Thus, a user can visually recognize the significant part without fail, and yet see through the non-significant part to the 3D map. In other words, the 3D map and object displaying apparatus according to the first aspect is capable of displaying an object as a superimposed image on a 3D map in such a manner that the information expressed by the object is clearly conveyed to the user, and yet the user is allowed to see the roads , streets, buildings, etc., which are already present on the 3D map.

As used herein, a state of being "non-opaque" includes a state of being transparent and a state of being translucent. Methods of displaying transparent objects include displaying objects as wire frames, among other methods. Methods of displaying translucent objects include shading or coloring objects which are displayed as wire frames, among other methods.

As used herein, a state of being "opaque" is not limited to a state of complete opaqueness (i.e., zero transparency). Similarly, a state of being "transparent" is not limited to a state of complete transparentness (i.e., 100% transparency). Accordingly, a state of being "translucent" is simply defined by a lower level of transparency than that defining a state of being "transparent". A state of being "opaque" is simply defined by a lower level of transparency than that defining a state of being "translucent".

A "3D map" is a map which illustrates the topography of an area (which is defined as one of a number of grid-like subdivisions of a given terrain) in a three-dimensional manner, including structures within the area, e.g., roads, streets, bridges, and the like. An "object" may be a navigation guidance signboard, a special structure, or a road sign, for example. When displayed, an object expresses information, which may be: a direction to be taken by a user in the case where the object is a navigation guidance signboard; or, in the case where the object is a special structure, what the structure is or what sort of business entity is accommodated therein ; or, in the case where the object is a road sign, a traffic regulation such as a wrong way or a speed limit)

A typical example of a "navigation guidance signboard" may be a signboard which may be installed on a highway in front of a junction for providing guidance concerning lane switching, or a road guidance signboard which may be installed on non-highway roads in front of an intersection, etc. A navigation guidance signboard is composed of a diagram (e.g. , an arrow) and/or a text string (e.g., "TURN RIGHT") to provide navigation guidance for leading a user (vehicle) in a direction to proceed, and a signboard bearing such a diagram and/or a text string.

A "special structure" refers to a structure other than the structures which are already present on a 3D map. Typical examples of special structures include buildings accommodating business entities (e.g., bookstores or convenience stores), public facility buildings (e.g., city halls or post offices), parking lots, gas stations, and the like. For example, a "building accommodating a bookstore" would include the structure (the building) itself as well as a signboard (e.g., "BOOKS") visually indicating that a bookstore is accommodated in the building.

Typical examples of road signs include speed limit signs and wrong way signs. A road sign is composed of a diagram and/or a text string visually representing a traffic regulation (e.g., the well-known diagram representative of a wrong way, or encircled digits representative of a speed limit) as well as a signboard bearing such a diagram and/or a text string.

Furthermore, according to a second aspect of the present invention describedbelow, when the object is a navigation guidance signboard comprising a signboard and a diagram and/or a text string, the diagram and/or text string corresponds to the significant part and the signboard corresponds to the non-significant part, and "non-opaque" is set as the predetermined transparency attribute for the signboard, and "opaque" is set as the predetermined transparency attribute for the diagram and/or text string. As a result, a navigation guidance signboard is displayed on the 3D map in such a manner that the diagram and/or text string appears opaque and that the signboard appears non-opaque. Thus, the user can visually recognize the diagram and/or text string representing navigation guidance without fail, and yet see through the signboard (except for a portion corresponding to the diagram and/or text string) to the 3D map. As a result, it is possible to know in advance what sort of driving operation is required in order to follow along the navigation guidance, whereby driving in accordance with the navigation guidance can be facilitated.

According to a fourth aspect of the present invention described below, when the object is a special structure and an accompanying signboard, the signboard corresponds to the significant part and the structure itself corresponds to the non-significant part. "Opaque" is set as the predetermined transparency attribute for the signboard, and "non-opaque" is set as the predetermined transparency attribute for the structure itself. As a result, a special structure is displayed as a superimposed image on the 3D map in such a manner that the signboard appears opaque and that the structure itself appears non-opaque. Thus, a user can visually recognize the signboard indicative of what the structure is (or what sort of business entity is accommodated therein) without fail, and yet see through the structure itself (except for the portion corresponding to the signboard) to the roads, streets, buildings, etc., which are present on the 3D map.

According to an seventh aspect of the present invention described below, when the object is a road sign comprising a signboard and a diagram and/or a text string, the diagram and/or text string corresponds to the significant part and the signboard corresponds to the non-significant part. "Non-opaque" is set as the predetermined transparency attribute for the signboard, and "opaque" is set as the predetermined transparency attribute for the diagram and/or text string. As a result, a road sign is displayed as a superimposed image on the 3D map in such a manner that the diagram and/or text string appears opaque and that the signboard appears non-opaque. Thus, the user can visually recognize the diagram and/or text string indicative of traffic regulations (e.g., speed limits or wrong ways) or road guidance without fail, and yet easily see through the signboard (except for the portion corresponding to the diagram and/or text string) to the roads, streets, buildings, etc. , which are present on the 3D map.

In the above-described first aspect, "opaque" is set as the predetermined transparency attribute for the significant part. However, as in the first aspect, in addition to the predetermined transparency attribute (default transparency attribute), a transparency attribute designating "non-opaque" may further be set which becomes valid only under a predetermined condition.

According to the first aspect, for the significant part, the storage means stores : the predetermined transparency attribute designating "opaque", a predetermined condition, and a conditional transparency attribute designating "non-opaque" which becomes valid only under the predetermined condition, and wherein the object displaying means determines whether or not the significant part satisfies the condition, and displays the significant part as a non-opaque image if a result of the determination is affirmative.

Thus, according to the first aspect, a significant part which is usually displayed as an opaque image is displayed as a non-opaque image only when a predetermined condition is satisfied. Thus, more parts are displayed as non-opaque images, and a broader range of the 3D map can be seen through the non-opaque parts, so that the roads, streets, buildings, etc., which are already present on the 3D map can be viewed even better.

According to a second aspect based on the first aspect, the object is a navigation guidance signboard comprising a signboard and a diagram and/ or a text string shown on the signboard for visually representing navigation guidance, such that the diagram and/or text string corresponds to the significant part and the signboard corresponds to the non-significant part, wherein the storage means stores "non-opaque" as the predetermined transparency attribute for the signboard, and "opaque" as the predetermined transparency attribute for the diagramand/or text string, and wherein the object displaying means displays the diagram and/or text string as an opaque image, and the signboard as a non-opaque image.

According to a third aspect based on the first aspect, the object is a lane guidance signboard comprising a signboard and a plurality of arrows shown on the signboard for representing respectively different lanes, such that the plurality of arrows respectively correspond to a plurality of said significant parts and the signboard corresponds to the non-significant part, wherein the storage means stores "non-opaque" as the predetermined transparency attribute for the signboard, and "opaque" as the predetermined transparency attribute for each arrow, and wherein the obj ect displaying means displays each arrow as an opaque image, and the signboard as a non-opaque image.

According to a fourth aspect based on the first aspect, the object comprises a special structure and a signboard accompanying the structure for visually representing an attribute of the structure, such that the signboard corresponds to the significant part and the special structure corresponds to the non-significant part, wherein the storage means stores, "non-opaque" as the predetermined transparency attribute for the special structure, "opaque" as the predetermined transparency attribute for the signboard, and wherein the object displaying means displays the signboard as an opaque image, and the special structure as a non-opaque image.

According to a fifth aspect based on the fourth aspect, the three-dimensional map and object displaying apparatus further comprises selection means for selecting one of a plurality of said special structures, wherein, for the signboard, the storage means stores: the predetermined transparency attribute designating "opaque" and a conditional transparency attribute designating "non-opaque" which becomes valid only when the special structure is unselected, and wherein the object displaying means displays the signboard accompanying any said special structure that is selected by the selection means as an opaque image, and the signboard accompanying any said special structure that is unselected as an non-opaque image.

Thus, according to the fifth aspect, if a special structure is selected, only the signboard which is shown on the selected special structure is displayed as an opaque image, and the signboards which are shown on any unselected special structures are displayed as non-opaque images. Thus, the user can clearly visually recognize the signboard associated with only the selected special structure. For example, if the user desires to look for a building accommodating a bookstore, the user may input "bookstore" so that only a signboard associated with a "building accommodating a bookstore" is displayed as an opaque image. As a result, the user can quickly know where such a bookstore is.

According to a sixth aspect based on the fourth aspect, for the signboard, the storage means stores: the predetermined transparency attribute designating "opaque", a predetermined time zone, and a conditional transparency attribute designating "non-opaque" which becomes valid only during the time zone, and wherein the object displaying means determines whether or not the current time falls in the time zone, and displays the signboard as a non-opaque image if a result of the determination is affirmative.

Thus, according to the sixth aspect, a signboard which is usually displayed as an opaque image is displayed as a non-opaque image only during a predetermined time zone.

For comparison, according to the aforementioned fourth aspect, in the case where the special structure is a "building accommodating a bookstore", a building is typically always displayed as a non-opaque image and the signboard always displayed as an opaque image. According to the sixth aspect, although the building is always displayed as a non-opaque image, the signboard is displayed as a non-opaque image, rather than an opaque image, if the current time falls in the predetermined time zone (which may typically be a time zone during which the bookstore is closed). Thus, more parts are displayed as non-opaque images, and a broader range of the 3D map can be seen through the non-opaque parts, so that the roads, streets, buildings, etc., which are alreadypresent on the 3D map can be viewed even better.

According to a seventh aspect based on the first aspect, the object is a road sign comprising a signboard and a diagram and/or a text string shown on the signboard for visually representing a traffic regulation, such that the diagram and/or text string corresponds to the significant part and the signboard corresponds to the non-significant part, wherein the storage means stores: "non-opaque" as the predetermined transparency attribute for the signboard, "opaque" as the predetermined transparency attribute for the diagram and/or text string, and wherein the object displaying means displays the signboard as a non-opaque image, and the diagram and/or text string as an opaque image.

According to an eighth aspect based on the seventh aspect, for the diagram and/or text string, the storage means stores: the predetermined transparency attribute designating "opaque", a predetermined time zone, and a conditional transparency attribute designating "non-opaque" which becomes valid only during the time zone, and wherein the object displaying means determines whether or not the current time falls in the time zone, and displays the diagram and/or text string as a non-opaque image if a result of the determination is affirmative.

Thus, according to the eighth aspect, a diagram and/or a text string which is usually displayed as an opaque image is displayed as a non-opaque image only during a predetermined time zone.

For comparison, according to the aforementioned seventh aspect, in the case where the object is a road sign, a diagram and/or text string is typically always displayed as a non-opaque image and the signboard always displayed as an opaque image. According to the eighth aspect, although the signboard is always displayed as a non-opaque image, the diagram and/or text string is displayed as a non-opaque image, rather than an opaque image, if the current time falls in a predetermined time zone (which may typicallybe a time zone during which a traffic regulation indicated by the diagram and/or text string is lifted, e.g., night hours or holidays). Thus, more parts are displayed as non-opaque images, and a broader range of the 3D map can be seen through the non-opaque parts, so that the roads, streets, buildings, etc., which are already present on the 3D map can be viewed even better.

A ninth aspect of the present invention is directed to a three-dimensional map and object displaying method for displaying an object for visually conveying predetermined information to a user as a superimposed image on a three-dimensional map, wherein the object includes a plurality of parts, the plurality of parts comprising a significant part and a non-significant part, wherein the three-dimensional map and object displaying method comprises: a storage step of storing drawing information and a predetermined transparency attribute for each part, the transparency attribute designating "opaque" or "non-opaque" in relation to a significance level of the part, wherein, for the significant part, the storage means stores: the predetermined transparency attribute designating "opaque", a predetermined condition, and a conditional transparency attribute designating "non-opaque" which becomes valid only under the predetermined condition; a map displaying step of displaying the three-dimensional map; and an object displaying step of performing a drawing process based on the drawing information and the transparency attribute for each part stored in the storage step, thereby displaying an object as a superimposed image on the three-dimensional map being displayed by the map displaying step, such that the significant part appears as an opaque image and the non-significant part appears as a non-opaque image, wherein the object displaying means determines whether or not the significant part satisfies the condition, and displays the significant part as a non-opaque image if a result of the determination is affirmative.

Thus, according to the ninth aspect, there is provided a 3D map and object displaying method, which is a counterpart to the 3D map and object displaying apparatus according to the first aspect.

An tenth aspect of the present invention is directed to a three-dimensional map and object displaying program for performing the three-dimensional map and object displaying method in accordance with claim 9.

Thus, according to the tenth aspect, there is provided a 3D map and object displaying program, which is a counterpart to the 3D map and object displaying apparatus according to the first aspect.

An eleventh aspect of the present invention is directed to a three-dimensional navigation apparatus for providing navigation by displaying a navigation guidance signboard as a superimposed image on a three-dimensional map, wherein the navigation guidance signboard comprises a signboard and a diagram and/or a text string shown on the signboard for visually representing navigation guidance, wherein the three-dimensional navigation apparatus comprises: storage means for storing : a predetermined transparency attribute designating "non-opaque" and drawing information for the signboard; and a predetermined transparency attribute designating "opaque" and drawing information for the diagram and/or text string; map displaying means for displaying the three-dimensional map; and navigation guidance signboard displaying means for performing a drawing process based on the drawing information and the transparency attribute stored in the storage means, thereby displaying a navigation guidance signboard as a superimposed image on the three-dimensional map being displayed by the map displaying means, such that the diagram and/or text string appears as an opaque image and the signboard appears as a non-opaque image.

Thus, according to the eleventh aspect, "non-opaque" is set as the predetermined transparency attribute for the signboard, and "opaque" is set as the predetermined transparency attribute for the diagram and/or text string. As a result, a navigation guidance signboard is displayed as a superimposed image on a 3D map in such a manner that the diagram and/or text string appears opaque and that the signboard appears non-opaque. Thus, the user can visually recognize the diagram and/or text string representing navigation guidance without fail, and yet see through the signboard (except for a portion corresponding to the diagram and/or text string) to the 3D map. As a result, it is possible to know in advance what sort of driving operation is required in order to follow along the navigation guidance, whereby driving in accordance with the navigation guidance can be facilitated.

Note that, in the eleventh aspect, a lane guidance signboard bearing a plurality of arrows representing respectively different lanes can be employed as the navigation guidance signboard. In other words, by superimposing a lane guidance signboard on a 3D map such that the signboard appears non-opaque and that the all of the arrows appear opaque but only the arrow indicating a direction to proceed is colored differently from the other arrows, the user can visually recognize the arrow representing navigation guidance without fail, and yet see through the signboard (except for portions corresponding to the arrows) to the roads, streets, buildings, etc., which are present on the 3D map. On the other hand, according to a twelfth aspect describedbelow, a lane guidance signboard having a plurality of arrows is displayed such that only the arrow indicating a direction to proceed appears opaque and that the other arrows appear non-opaque.

According to a twelfth aspect based on the eleventh aspect, the diagram and/or text string comprises a plurality of arrows visually representing respectively different lanes, wherein the three-dimensional navigation apparatus further comprises search means for searching for an optimum route based on a current position of a vehicle, determining a direction for the vehicle to proceed, and informing the navigation guidance signboard displaying means of the direction, wherein, for each arrow, the storage means stores: the predetermined transparency attribute designating "opaque", a direction represented by the arrow, and a conditional transparency attribute designating "non-opaque" which becomes valid only when the direction for the vehicle to proceed is inconsistent with the direction represented by the arrow, and wherein, for each arrow, the navigation guidance signboard displaying means determines whether or not the direction for the vehicle to proceed is inconsistent with the direction represented by the arrow, and displays any said arrow for which a result of the determination is negative as an opaque image, and any said arrow for which a result of the determination is affirmative as a non-opaque image.

Thus, according to the twelfth aspect, a lane guidance signboard having a plurality of arrows is displayed as a navigation guidance signboard on a 3D map in such a manner that only the arrow indicating a direction to proceed appears opaque and that the other arrows appear non-opaque. Thus, the user can visually recognize the arrow indicating a direction to proceed (i.e., only the arrow which is essential to the understanding of the navigation guidance) without fail, and yet see through the signboard (except for a portion corresponding the arrow indicating the direction to proceed) to the 3D map. Thus, more non-opaque arrows are displayed than in the case of displaying as a navigation guidance signboard a lane guidance signboard such that all of the arrows appear opaque but only the arrow indicating a direction to proceed is colored differently from the other arrows, and a broader range of the 3D map can be seen through the signboard (except for the portion corresponding to the opaque arrow). As a result, the roads, streets, buildings, etc., which are already present on the 3D map can be viewed even better, whereby driving in accordance with the navigation guidance can be facilitated.

According to a thirteenth aspect based on the eleventh aspect, the three-dimensional navigation apparatus further comprises selection means for selecting one of a plurality of said special structures as a destination location, wherein, for the signboard, the storage meansstores:the predetermined transparency attribute designating "opaque" and a conditional transparency attribute designating "non-opaque" which becomes valid only when the special structure is unselected, and wherein the object displaying means displays the signboard accompanying any said special structure that is selected by the selection means to be the destination location as a non-opaque image, and the signboard accompanying any said special structure that is unselected as a non-opaque image.

Thus, according to the thirteenth aspect, if a special structure is selected as a destination location, only the signboard which is associated with the special structure selected to be the destination location is displayed as an opaque image, and the signboards associated with any unselected special structures are displayed as non-opaque images. Thus, the user can clearly visually recognize the signboard associated with only the special structure selected to be the destination location. For example, if the user desires to go to a bookstore, the user may input the telephone number, address, or the like of the bookstore so that only a signboard associated with the relevant "building accommodating a bookstore" is displayed as an opaque image. As a result, the user can quickly know where such a bookstore is.

A fourteenth aspect of the present invention is directed to a three-dimensional navigation method for providing navigation by displaying a navigation guidance signboard as a superimposed image on a three-dimensional map, wherein the navigation guidance signboard comprises a signboard and a diagram and/or a text string shown on the signboard for visually representing navigation guidance, wherein the three-dimensional navigation method comprises: a storage step of storing: a predetermined transparency attribute designating "non-opaque" and drawing information for the signboard; and a predetermined transparency attribute designating "opaque" and drawing information for the diagram and/or text string; a map displaying step of displaying the three-dimensional map; and a navigation guidance signboard displaying step of performing a drawingprocess based on the drawing information and the transparency attribute stored in the storage step, thereby displaying a navigation guidance signboard as a superimposed image on the three-dimensional map being displayed by the map displaying step, such that the diagram and/or text string appears as an opaque image and the signboard appears as a non-opaque image.

Thus, according to the fourteenth aspect, there is provided a 3D navigation method, which is a counterpart to the 3D navigation apparatus according to the eleventh aspect.

A fifteenth aspect of the present invention is directed to a three-dimensional navigation program executed by a computer comprised in an apparatus for providing navigation by displaying a navigation guidance signboard as a superimposed image on a three-dimensional map, wherein the navigation guidance signboard comprises a signboard and a diagram and/or a text string shown on the signboard for visually representing navigation guidance, wherein the three-dimensional navigation program comprises: a storage step of storing: a predetermined transparency attribute designating "non-opaque" and drawing information for the signboard;and a predetermined transparency attribute designating "opaque" and drawing information for the diagram and/or text string; a map displaying step of displaying the three-dimensional map; and a navigation guidance signboard displaying step of performing a drawing process based on the drawing information and the transparency attribute stored in the storage step, thereby displaying a navigation guidance signboard as a superimposed image on the three-dimensional map being displayed by the map displaying step, such that the diagram and/or text string appears as an opaque image and the signboard appears as a non-opaque image.

Thus, according to the fifteenth aspect, there is provided a 3D navigation program, which is a counterpart to the 3D navigation apparatus according to the eleventh aspect.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram illustrating the structure of an onboard-type navigation apparatus according to a first embodiment of the present invention;
FIG. 2 is a diagram illustrating a memory map of a storage section 4 shown in FIG. 1;
FIG. 3 is a flowchart illustrating the operation of the onboard-type navigation apparatus (and in particular that of a control section 9) according to the first embodiment of the present invention, also illustrative of a second embodiment of the present invention;
FIG. 4 is a diagram illustrating (A) the structure of each unit of 3D map information 11 stored in the storage section 4 shown in FIG. 1, and (B) an exemplary image of a 3D map which is drawn based on that information;
FIG. 5 is a flowchart illustrating the details of step S8 (navigation guidance signboard displaying process) in FIG. 3;
FIG. 6 is a diagram illustrating (A) the structure of object information 12 [navigation guidance signboard] stored in the storage section 4 shown in FIG. 1, (B) an exemplary image of a signboard which is drawn based on that information, and (C) an overall image of the signboard being superimposed on the 3D map, where a lane guidance signboard is illustrated as a navigation guidance signboard;
FIG. 7 is a flowchart illustrating the details of step S23 (navigation guidance signboard outputting process) in FIG. 5;
FIG. 8 is a flowchart illustrating the details of step S4 (special structure displaying process) in FIG. 3;
FIG. 9 is a diagram illustrating (A) the structure of the obj ect information 12 [building accommodating a bookstore] stored in the storage section 4 shown in FIG. 1, (B) an exemplary image of a building accommodating a bookstore which is drawn based on that information, and (C) an overall image of the building accommodating a bookstore being superimposed on the 3D map;
FIG. 10 is a flowchart illustrating the details of step S42 (special structure outputting process) in FIG. 8;
FIG. 11 is a diagram showing an exemplary image of a speed limit sign;
FIG. 12 is a diagram showing an exemplary image of a road guidance signboard;
FIG. 13 shows a lane guidance signboard being displayed as a mere object superimposed on a 3D map, where (A) is the structure of information (object information 12) pertaining to this signboard; (B) is an exemplary image of the signboard; and (C) is an overall image of the signboard being superimposed on the 3D map;
FIG. 14A is a diagram illustrating the structure of part information according to the first embodiment of the present invention;
FIG. 14B is a diagram illustrating the structure of the part information according to the second embodiment of the present invention;
FIG. 15 is a diagram illustrating (A) the structure of the object information 12 [navigation guidance signboard] stored in the storage section 4 shown in FIG. 1 , and (B) an overall image of a signboard, which is drawn based on that information, being superimposed on the 3D map, according to the second embodiment of the present invention;
FIG. 16 is a flowchart illustrating the details of step S23 (navigation guidance signboard outputting process) in FIG. 5 according to the second embodiment of the present invention;
FIG. 17 is a diagram illustrating (A) the structure of object information 12 [building accommodating a bookstore] stored in the storage section 4 shown in FIG. 1, and (B) an exemplary image of a building accommodating a bookstore which is drawn based on that information, according to the second embodiment of the present invention;
FIG. 18 is a flowchart illustrating the details of step S42 (special structure outputting process) in FIG. 8 according to the second embodiment of the present invention; and
FIGS. 19A and 19B are illustrations of two methods for displaying a navigation guidance signboard as a superimposed image on a 3D map employed by conventional navigation apparatuses.

### DESCRIPTION OF THE PREFERRED EMBODIMENTS

Hereinafter, illustrative embodiments of the present invention will be described with reference to the figures.

### (first embodiment)

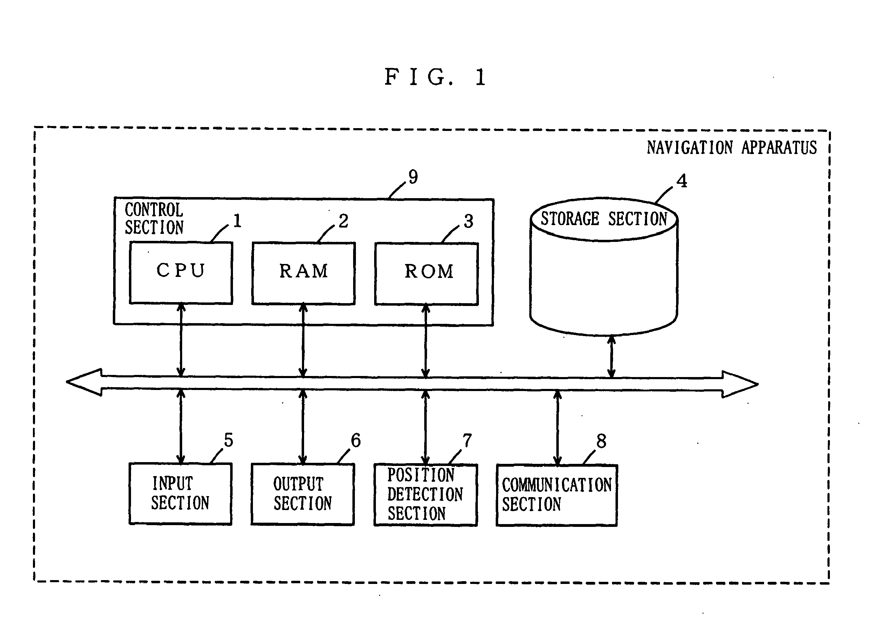

FIG. 1 is a block diagram illustrating the structure of an onboard-type navigation apparatus according to a first embodiment of the present invention. As shown in FIG. 1, the navigation apparatus comprises a control section 9, a storage section 4, an input section 5, an output section 6, a position detection section 7, and a communication section 8.

In accordance with the present navigation apparatus, the control section 9 controls the other sections (i.e., the storage section 4, the input section 5, the output section 6, the position detection section 7, and the communication section 8) to realize various navigation functions, such as determining a current position of the vehicle to thereby conduct a route search, or displaying images such as a map and/or guidance.

The control section 9 includes a CPU 1, a RAM 2, and a ROM 3. The ROM 3 stores predetermined a program(s). The aforementioned various kinds of control are realized by the CPU 1 executing the program(s) in the ROM 3 while utilizing the RAM 2 as a working area.

The storage section 4, which is implemented by using a storage medium such as a CD-ROM, a DVD, or a hard disk, stores various information, image data, and the like for conducting a route search and providing navigation guidance.

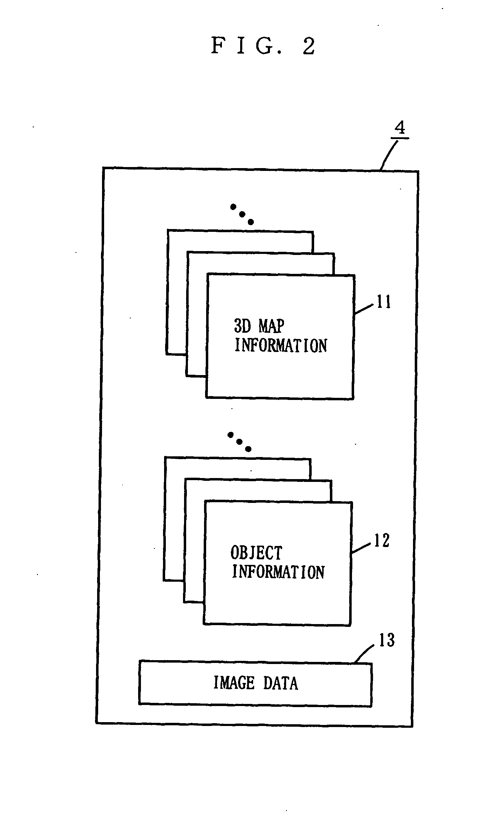

FIG. 2 is a diagram illustrating a memory map of the storage section 4 shown in FIG. 1. As shown in FIG. 2, the storage section 4 stores: information (3D map information 11) for drawing a plurality of 3D maps respectively corresponding to different areas; information (object information 12) for drawing a plurality of objects respectively corresponding to different navigation guidance signboards, road signs, and/or special structures; and image data 13.

As used herein, a "3D map" is a map which illustrates the topography of an area (which is defined as one of a number of grid-like subdivisions of a given terrain) in a three-dimensional manner, including structures within the area, e.g., roads, streets, bridges, and the like.

A typical example of a navigation guidance signboard may be to a signboard which may be installed on a highway in front of a junction for providing guidance concerning lane switching, or a road guidance signboard which may be installed on non-highway roads in front of an intersection, etc. Typical examples of road signs include speed limit signs and wrong way signs. A "special structure" refers to a structure other than the structures which are already present on a 3D map. Typical examples of special structures include buildings accommodating business entities (e.g., bookstores or convenience stores), public facility buildings (e.g., city halls or post offices), parking lots, gas stations, and the like.

An "object" is composed of a plurality of parts. For example, a navigation guidance signboard is composed of a diagram (e.g., an arrow) and/or a text string (e.g., "TURN RIGHT") to provide navigation guidance for leading a user (vehicle) in a direction to proceed, and a signboard bearing such a diagram and/or a text string. Similarly, a road sign is composed of. a diagram and/or a text string visually representing a traffic regulation (e.g., the well-known diagram representative of a wrong way, or encircled digits representative of a speed limit) as well as a signboard bearing such a diagram and/or a text string. As for special structures, for example, a "building accommodating a bookstore" would include the structure (the building) itself as well as a signboard (e.g., "BOOKS") visually indicating that a bookstore is accommodated in the building.

The present navigation apparatus displays a navigation guidance signboard or the like described above as a superimposed image on a 3D map to lead a user (vehicle) in a direction to proceed, that is, a direction which is consistent with the optimum route.

Apart from the aforementioned navigation function, the present navigation apparatus has a function of informing the user of regulations such as speed limits, wrong ways, or the like found in the neighborhood of the current position by displaying (as superimposed images on a 3D map) objects corresponding to such road signs in the neighborhood of the current position or special structures (e.g., business entities or parking lots not originally included on the 3D map) in the neighborhood of the current position, and informing the user of the positions of special structures in the neighborhood of the current position as well as what those structures are (or what sort of business entities are accommodated in such structures).

The most important feature of the present navigation apparatus is that a transparency attribute is set for each one of the parts composing an object, where the transparency attribute is predetermined to be either opaque or non-opaque, depending on the significance level of the part. As a result, an object whose significant part(s) appears opaque and whose non-significant part(s) appears non-opaque can be displayed as a superimposed image on a 3D map.

For example, if the object is a navigation guidance signboard, the diagram and/or text string constitutes a significant part, whereas the signboard itself constitutes a non-significant part. Accordingly, "non-opaque" is assigned as a predetermined transparency attribute for the signboard, whereas "opaque" is assigned as a predetermined transparency attribute for the diagram and/or text string. As a result, an opaque mage of the diagram and/or text string and a non-opaque image of the signboard are superimposed on the 3D map. Thus, the user can clearly recognize the diagram and/or text string as a visual representation of navigation guidance, and yet see through the non-opaque signboard to the portion of the 3D map underlying the signboard (i.e., the roads, streets, buildings, etc., lying ahead of the signboard).

Similarly, if the object is a building accommodating a bookstore, the signboard thereof constitutes a significant part, whereas the building constitutes a non-significant part. Thus, "non-opaque" is stored as a predetermined transparency'attribute for the building, and "opaque" is stored as a predetermined transparency attribute for the signboard. As a result, an opaque image of the signboard and a non-opaque image of the building are superimposed on the 3D map. Thus, the user can clearly recognize the signboard indicating that a bookstore is accommodated in the building, and yet see through the non-opaque building to any roads, streets, bridges, etc., lying ahead of the building.

As used herein, a state of being "non-opaque" includes a state of being transparent and a state of being translucent. Methods of displaying transparent objects include displaying objects as wire frames, among other methods. Methods of displaying translucent objects include shading or coloring objects which are displayed as wire frames, among other methods.

As used herein, a state of being "opaque" is not limited to a state of complete opaqueness (i.e., zero transparency). Similarly, a state of being "transparent" is not limited to a state of complete transparentness (i.e., 100% transparency). For example, a 95% transparency may be considered "transparent", a 30% transparency "translucent", and a 5% transparency "opaque". Thus, a state of being "translucent" is simply defined by a lower level of transparency than that defining a state of being "transparent", and a state of being "opaque" is simply defined by a lower level of transparency than that defining a state of being "translucent".

Referring back to FIG. 1, the input section 5, which may be implemented as a keyboard, a touch panel or the like, receives an instruction inputted by the user. The output section 6, which may be implemented as a display device, etc., outputs the 3D map and/or objects as graphical images. The position detection section 7, which is implemented as a GPS receiver, etc., detects the current position of the vehicle. The communication section 8, which is implemented as a mobile phone, etc., obtains information which may be necessary for the route search, e.g., traffic information or weather information, and/or latest information (e.g., business hours) concerning business entities, parking lots, and the like alongside the route, from a source external to the vehicle.

The operation of the navigation apparatus having the above-described configuration will be described below. The following description assumes that the present apparatus is mounted in a vehicle.

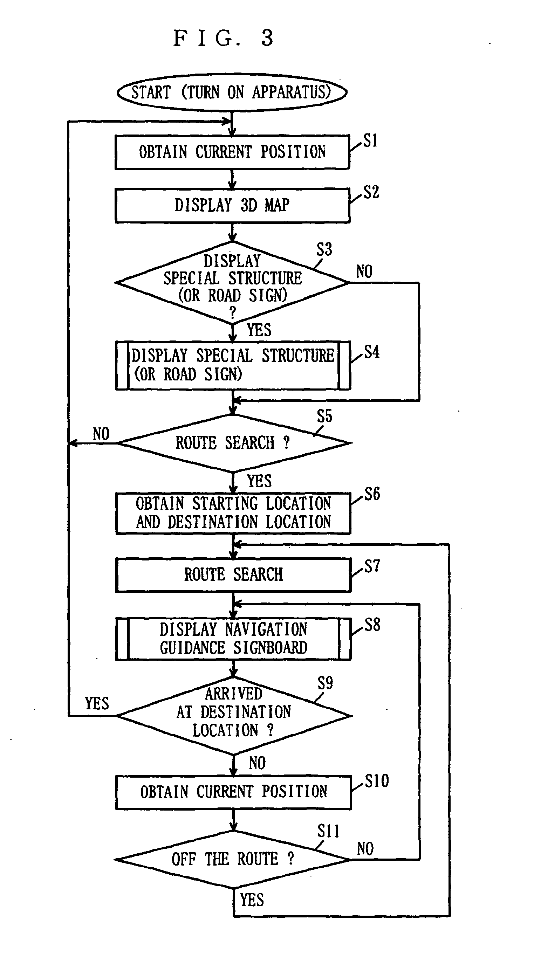

FIG. 3 is a flowchart illustrating the operation of the present navigation apparatus (and in particular that of the control section 9). Referring to FIG. 3, as the present apparatus is turned on, the control section 9 first obtains the current position of the vehicle via the position detection section 7 (step S1). Specifically, the position detection section 7 receives radiowaves from GPS satellites to calculate the current position therefrom, and passes the result of the calculation to the control section 9.

Next, the control section 9 reads a 3D map of the neighborhood of the current position of the vehicle from the storage section 4, and outputs the 3D map via the output section 6 so as to be displayed on the display device (step S2).

Now, the 3D map displaying process of step S2 will be specifically described.

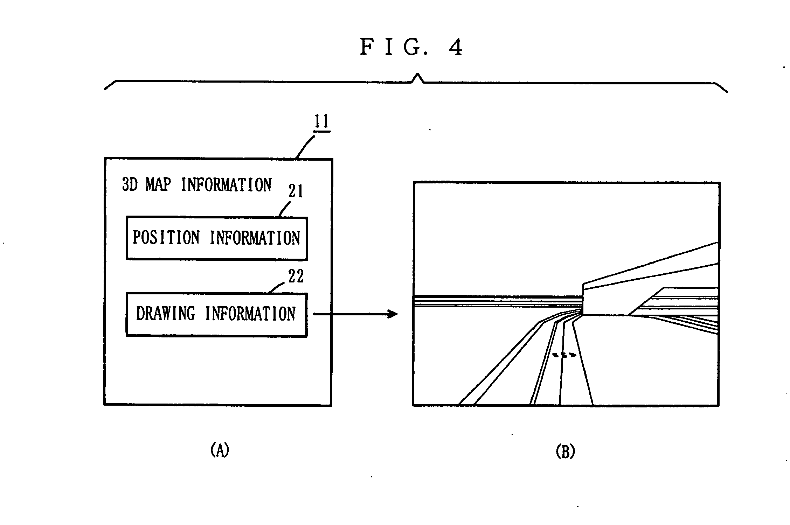

FIG. 4 is a diagram illustrating (A) the structure of each unit of 3D map information 11 stored in the storage section 4 shown in FIG. 1, and (B) an exemplary image of a 3D map which is drawn based on that information. As shown in (A) of FIG. 4, the 3D map information 11 stored in the storage section 4 includes position information 21 (i.e., information that can identify which 3D map corresponds to which area, expressed in terms of latitudes and longitudes, etc.), and drawing information 22 for drawing a 3D map of that area.

In the 3D map displaying process of step S2, the control section 9 first refers to the position information 21 included in each unit of 3D map information 11 stored in the storage section 4 to select a unit of 3D map information 11 which corresponds to an area containing the vehicle. Then, the control section 9 performs a drawing process based on the drawing information 22 included in that 3D map information 11 while utilizing the image data 13 stored in the storage section 4, and outputs the resultant 3D map via the output section 6. Thus, a 3D map as shown in (B) of FIG. 4 is displayed on the display device.

Referring back to FIG. 3, the control section 9 next determines whether or not to display a special structure (step S3). If the result of the determination is affirmative, the control section 9 displays the special structure (step S4), and proceeds to step S5. On the other hand, if the result of the determination is negative, the control section 9 proceeds directly to step S5. The details of a special structure displaying process of step S4 will be described later.

Next, the control section 9 determines whether or not to conduct a route search (step S5). If the result of the determination is negative, the control section 9 returns to step S1.

If the result of the determination at step S5 is affirmative, the control section 9 obtains the positions of a starting location and a destination location (step S6). The position of the starting location is the current position which has been obtained at step S1, and the position of the destination location is a position which is inputted by the user via the input section 5. Both positions may be expressed in terms of latitudes and longitudes, for example.

Then, the control section 9 searches for an optimum route from the starting location to the destination location (step S7). This route search may be accomplished by well-known Dijkstra's algorithm, among other search methods.

Next, the control section 9 displays a navigation guidance signboard which visually represents a direction for the vehicle to proceed as a superimposed image on the 3D map which is being displayed by the process of step S2 (step S8).

Now, a navigation guidance signboard displaying process of step S8 will be specifically described.

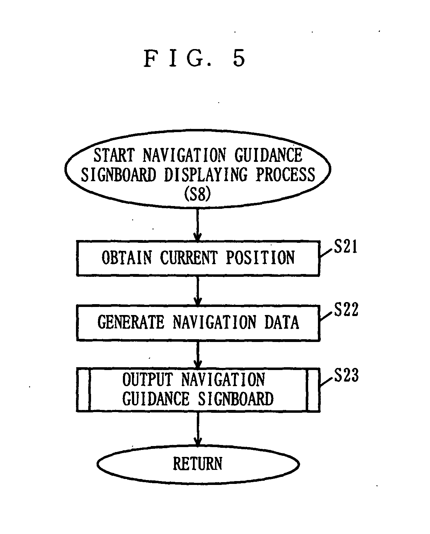

FIG. 5 is a flowchart illustrating the details of step S8 (navigation guidance signboard displaying process) in FIG. 3. In FIG. 5, the control section 9 first obtains the current position of the vehicle via the position detection section 7 (step S21). Next, based on the optimum route which has been looked up in step S7 and the current position obtained in step S21, the control section 9 generates navigation data describing a direction for the vehicle to proceed (step S22). Specifically, if the vehicle needs to make a right turn at the next intersection in order to proceed along the optimum route, navigation data indicating a right turn is generated.

Next, the control section 9 outputs a navigation guidance signboard corresponding to the navigation data generated at step S22 via the output section 6 (step S23). As a result, a navigation guidance signboard indicating a direction for the vehicle to proceed is displayed as a superimposed image on the 3D map which is being displayed by the process of step S2. Thereafter, the control returns to the flow of FIG. 3 to execute step S9 (the process of S9 and the subsequent steps will be described later).

Now, step S23 (navigation guidance signboard outputting process) of FIG. 5 will be specifically described. The following description is directed to an exemplary case where the navigation guidance signboard is a lane guidance signboard having a plurality of arrows respectively corresponding to a plurality of lanes, where only the arrow corresponding to the lane (direction) for the vehicle to take is displayed in a different color.

The aforementioned "lane guidance signboard" is composed of two parts, namely, the signboard and the plurality of arrows respectively corresponding to the plurality of lanes (possible directions to proceed) indicated on the signboard.

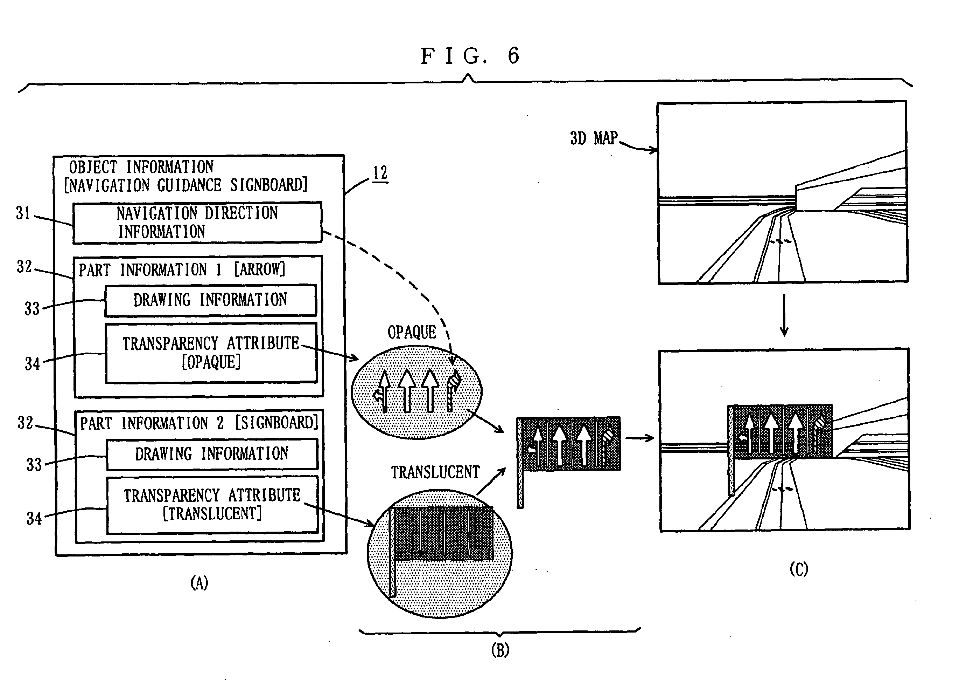

FIG. 6 is a diagram illustrating (A) the structure of the navigation guidance signboard information stored in the storage section 4 shown in FIG. 1, (B) an exemplary image of a signboard which is drawn based on that information, and (C) an overall image of the signboard being superimposed on the 3D map.

As shown in (A) of FIG. 6, the navigation guidance signboard information stored in the storage section 4 includes: navigation direction information 31, i.e., information indicating directions (e.g., straight, right turn, or left turn) which the navigation guidance provided by a given signboard concerns; and part information 32, i.e., information concerning each of the parts composing the navigation guidance signboard part (note that the signboard itself is a part, whereas any arrow indicated thereon is another).

Each unit of part information 32 includes: drawing information 33 for drawing a part, where the information includes the shape, color, etc., of the part; and a transparency attribute 34 which indicates whether the part is to be displayed as an opaque image or a non-opaque image.

The example shown in FIG. 6 illustrates a lane guidance signboard having a plurality of arrows respectively expressing different lanes indicated on the signboard. The arrow corresponding to the rightmost lane is displayed in a different color from the other arrows to instruct the user to go down the rightmost lane corresponding to the colored arrow and then turn right.

Furthermore, as shown in (A) of FIG. 6, [opaque] is set as the transparency attribute 34 for the plurality of arrows, which are considered-as significant parts, whereas [translucent] is set as the transparency attribute 34 for the signboard, which is considered as a non-significant part.

Thus, as shown in (B) of FIG. 6, this lane guidance signboard will be displayed in such a manner that the arrows appear opaque whereas the signboard appears translucent, since the transparency attribute 34 of the arrows is set to [opaque] and the transparency attribute 34 of the signboard is set to [translucent].

Although the transparency attribute 34 of the non-significant part signboard is set to [translucent] so that the signboard is displayed as a translucent image in this example, it is also applicable to set the transparency attribute 34 of the signboard to [transparent] so that the signboard will be displayed as a transparent image.

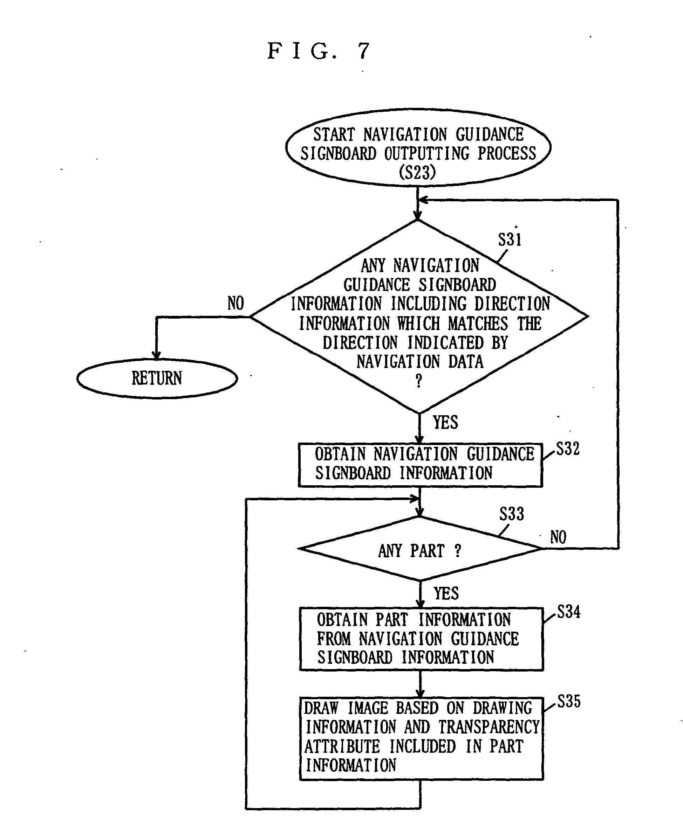

FIG. 7 is a flowchart illustrating the details of step S23 (navigation guidance signboard outputting process) in FIG. 5. Referring to FIG. 7, the control section 9 first determines whether or not any object information 12 including direction information which matches the direction indicated by the navigation data generated at step S22 is present in the storage section 4 (step S31). If the result of the determination is negative, the control returns to the flow of FIG. 3 to execute step S9.

If the result- of the determination at step S31 is affirmative, the control section 9 obtains object information 12 [navigation guidance signboard] including direction information which matches the direction indicated by the navigation data from the storage section 4 (step S32). Then, it is determined whether or not the object information 12 includes any part information 32 (step S33). If the result of the determination is negative, the control returns to step S31.

If the result of the determination at step S33 is affirmative, the control section 9 retrieves part information 32 from the object information 12 obtained at step S32 (step S34). Then, in accordance with the drawing information 33 and the transparency attribute 34 included in each unit of part information 32 retrieved, a drawing process is performed using the image data 13 stored in the storage section 4. The resultant navigation guidance signboard is outputted via the output section 6 (step S35). Thereafter, the control returns to step S33, and similar processes are repeated as described above.

For example, if two units of part information 32 shown in (A) of FIG. 6, i.e., information concerning a signboard and information concerning arrows, are retrieved at step S34, the transparency attribute 34 of the signboard is [translucent] and the transparency attribute 34 of the arrows is [opaque]. By performing a drawing process in accordance with such transparency attributes 34, a navigation guidance signboard as shown in (B) of FIG. 6 having opaque arrows on a translucent signboard is obtained.

In this case, as shown in (C) of FIG. 6 (upper diagram), a 3D map is being displayed on the display device by the process of step S2. On this 3D map, the aforementioned navigation guidance signboard, having opaque arrows on a translucent signboard, is superimposed. All of the arrows on the signboard shown in (C) of FIG. 6 (lower diagram) are opaque, and only the rightmost arrow has a different color than the others (for example, the rightmost arrow may be colored red, while the other arrows may be colored white). Based on the one arrow which is colored differently, the user will know that the user needs to go down the rightmost lane and turn right at the next intersection in order to proceed along the optimum route to the destination location.

A main characteristic of the above navigation guidance signboard is that the arrows, which are considered significant because of indicating navigation guidance, are displayed as opaque images, whereas the non-significant signboard (other than the portions corresponding to the arrows) is displayed as a translucent image. By displaying such a signboard as a superimposed image on the 3D map, the user will be able to see through to the roads, streets, buildings, etc., lying ahead of the signboard, and yet clearly recognize the arrows because they are not obscured by any underlying roads, streets, or buildings.

As mentioned earlier, conventional navigation apparatuses which provide navigation guidance by displaying a navigation guidance signboard so as to overlie a 3D map have the following problems. That is, if an entirely opaque navigation guidance signboard (containing opaque arrows) is displayed by such a conventional navigation apparatus, the signboard will be clearly visible, but the roads, streets, buildings, etc., lying ahead of the signboard will be concealed from view by the signboard. On the other hand, if an entirely translucent (or transparent) navigation guidance signboard (containing translucent or transparent arrows) is displayed by such a conventional navigation apparatus, the signboard itself appears obscure although the roads, streets, buildings, etc., lying ahead of the signboard will be visible through the signboard. In either case, it is difficult to drive a vehicle while relying on the navigation guidance signboard.

In contrast, the navigation apparatus according to the present embodiment of the invention displays a navigation guidance signboard as a superimposed image on a 3D map, such that only the arrows are opaque, and the signboard except for the portions corresponding to the arrows is translucent (or transparent). Therefore, arrows indicating navigation guidance can be recognized without fail, and yet it is possible to see through the signboard (except for the portions corresponding to the arrows) to the roads, streets, buildings, etc., lying ahead of the signboard. As a result, it is possible to know in advance what sort of driving operation is required in order to follow along the navigation guidance, whereby driving in accordance with the navigation guidance can be facilitated.

Referring back to FIG. 3, the control section 9 next determines whether or not the destination location has been reached (step S9). If the result of the determination is affirmative, the control returns to step S1.

If the result of the determination at step S9 is negative, the control section 9 obtains the current position of the vehicle via the position detection section 7 (step S10), and then determines whether the current position of the vehicle is off the route or not (step S11). If the result of the determination is negative, the control returns to step S8 and continues to provide navigation guidance along the currently optimum route.

If the result of the determination at step S11 is affirmative, the control section 9 returns to step S7 to conduct another route search. Thereafter, navigation guidance is provided along the optimum route which has been newly looked up.

The above-described navigation process continues until the apparatus is turned off.

Next, the details of the special structure displaying process of step S4 in FIG. 3 will be described.

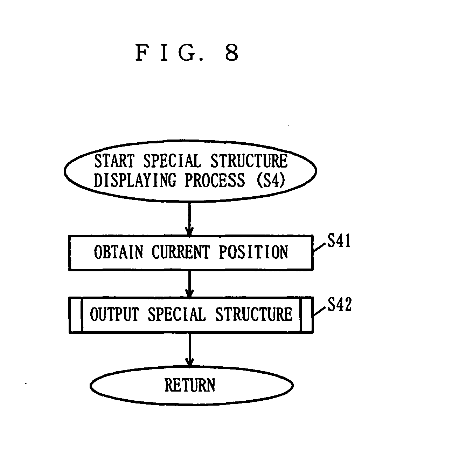

FIG. 8 is a flowchart illustrating the details of step S4 (special structure displaying process) in FIG. 3. Referring to FIG. 8, the control section 9 first obtains the current position of the vehicle via the position detection section 7 (step S41). Next, the control section 9 outputs a special structure(s) in the neighborhood of the current position obtained at step S41 via the output section 6 (step S42). As a result, the special structure(s) is displayed as a superimposed image on the 3D map which is being displayed by the process of step S2. Thereafter, the control returns to the flow of FIG. 3 to execute step S5 (the ensuing processes have already been described above).

Next, the details of the special structure outputting process of step S42 in FIG. 8 will be described. The following description is directed to an exemplary case where the special structure is a "building accommodating a bookstore". The "building accommodating a bookstore" is composed of two parts, namely, the building itself and a signboard shown on the building to indicate that the building accommodates a bookstore.

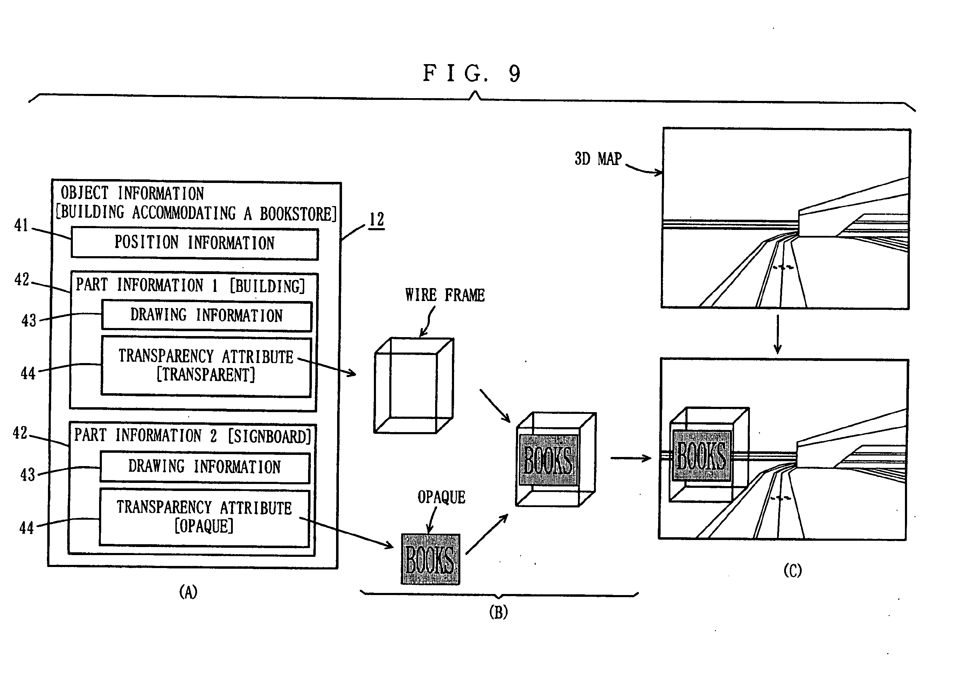

FIG. 9 is a diagram illustrating (A) the structure of the object information 12 [building accommodating a bookstore] stored in the storage section 4 shown in FIG. 1, (B) an exemplary image of a building accommodating a bookstore which is drawn based on that information, and (C) an overall image of the building accommodating a bookstore being superimposed on the 3D map.

As shown in (A) of FIG. 9, the object information 12 [building accommodating a bookstore] stored in the storage section 4 includes: position information 41, i.e., information representing the position of the object; and part information 42, i.e., information concerning each of the parts composing the object (note that the building itself is a part, whereas the signboard shown on the building is another).

Each unit of part information 42 includes: drawing information 43 for drawing a part, where the information includes the shape, color, etc., of the part; and a transparency attribute 44 which indicates whether the part is to be displayed as an opaque image or a non-opaque image (which in the present example is assumed to be a transparent wire frame image).

As shown in (A) of FIG. 9, [opaque] is set as the transparency attribute 44 for the signboard, which is considered as a significant part, and [transparent] is set as the transparency attribute 44 for the building itself, which is considered as a non-significant part.

As a result, as shown in (B) of FIG. 9, the "building accommodating a bookstore" will be displayed in such a manner that the building itself appears as a transparent and three-dimensional wire frame, etc. , whereas the signboard (which in this example bears the text string "BOOKS" on it) appears opaque.

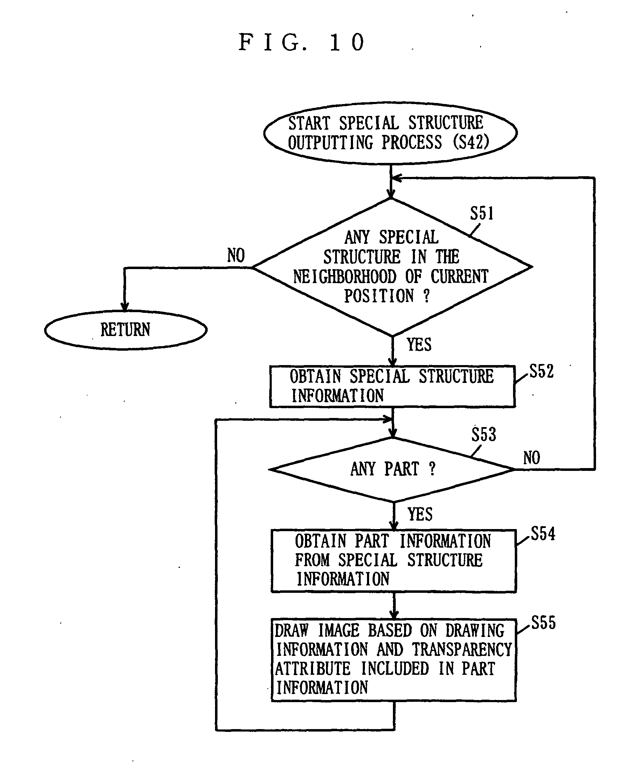

FIG. 10 is a flowchart illustrating the details of step S42 (special structure outputting process) in FIG. 8. Referring to FIG. 10, the control section 9 first determines whether or not any object information 12 concerning a special structure(s) located in the neighborhood of the current position obtained at step S41 is present in the storage section 4 (step S51). If the result of the determination is negative, the control returns to the flow of FIG. 3 to execute step S5.

If the result of the determination at step S51 is affirmative, the control section 9 obtains object information 12 [building accommodating a bookstore] whose position information 41 indicates a position within a predetermined neighborhood region of the current position from the storage section 4 (step S52). Then, the control section 9 determines whether the object information 12 includes part information 42 or not (step S53). If the result of the determination is negative, the control returns to step S51.

If the result of the determination at step S53 is affirmative, the control section 9 retrieves part information 42 from the object information 12 which was obtained at step S52 (step S54). In accordance with the drawing information 43 and the transparency attribute 44 included in each retrieved unit of part information 42, the control section 9 performs a drawing process using the image data 13 stored in the storage section 4, and outputs a special structure thus obtained via the output section 6 (step S55). Thereafter, the control returns to step S53, and similar processes are repeated as described above.

For example, if two units of part information 42 as shown in (A) of FIG. 9, i.e., information concerning a building itself and information concerning a signboard, are retrieved at step S54, the transparency attribute 44 of the building is [transparent] and the transparency attribute 44 of the signboard is [opaque]. By performing a drawing process in accordance with such transparency attribute 44, a "building accommodating a bookstore" as shown in (B) of FIG. 9, comprising a transparent building and an opaque signboard, is obtained.

In this case, as shown in (C) of FIG. 9 (upper diagram), a 3D map is being displayed on the display device by the process of step S2. On this 3D map, the aforementioned special structure, i.e., a "building accommodating a bookstore" having an opaque signboard shown on a transparent wire frame building, is superimposed. The text string "BOOKS" is indicated on the signboard shown in (C) of FIG. 9 (lower diagram). Based on this signboard, the user will know the position of the bookstore on the 3D map.

A main characteristic of the above special structure, e.g., a "building accommodating a bookstore", is that the signboard, which is considered significant because of indicating that the building accommodates a bookstore, is displayed as an opaque image, whereas the non-significant building itself (other than the portion corresponding to the signboard) is displayed as a transparent image. By displaying such a special structure,e.g., a "building accommodating a bookstore", as a superimposed image on the 3D map, the user will be able to see through to the roads, streets, or other buildings lying ahead of the building, and yet clearly recognize the signboard which is not obscured by any underlying roads, streets, or buildings.

As mentioned earlier, the conventional cases of displaying a special structure so as to overlie a 3D map have the following problems. That is, if an entirely opaque special structure (containing an opaque signboard) is displayed, the structure will be clearly visible, but the roads, streets, buildings, etc., lying ahead of the structure will be concealed from view by the structure. On the other hand, if an entirely translucent (or transparent) special structure (containing a translucent or transparent signboard) is displayed, the signboard appears obscure although the roads, streets, buildings, etc., lying ahead of the structure will be visible through the structure. As a result, it becomes difficult to know what the structure contains.

In contrast, the navigation apparatus according to the present embodiment of the invention displays a special structure as a superimposed image on a 3D map, such that only the signboard is opaque, and the structure itself is transparent (or translucent) . Therefore, it is possible to clearly recognize the signboard, which is essential for knowing what the structure is (i.e., what sort of business entity is accommodated therein) , and yet it is possible to see through the structure (except for the portion corresponding to the signboard) to the roads, streets, or other buildings, etc., so that it is possible to grasp the position of the special structure on the 3D map.

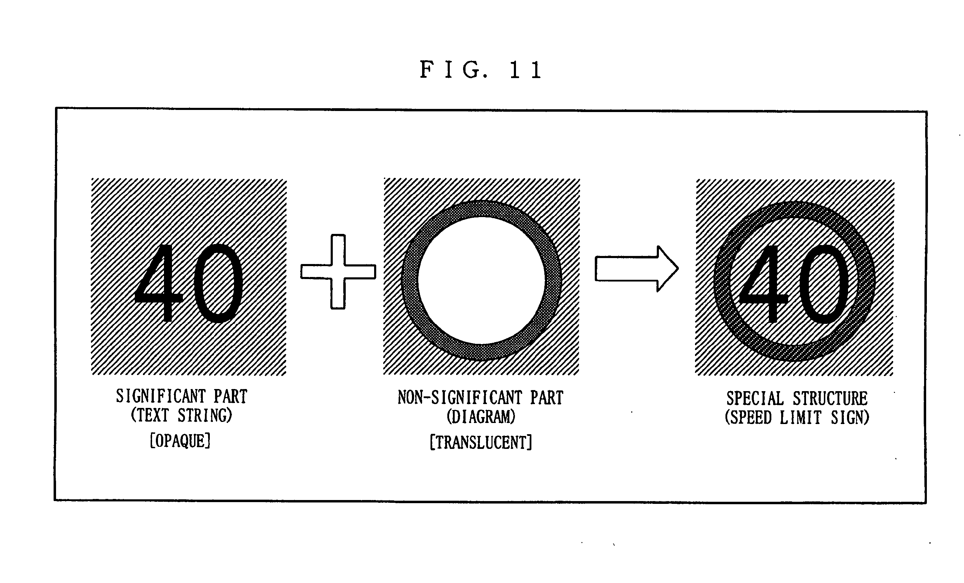

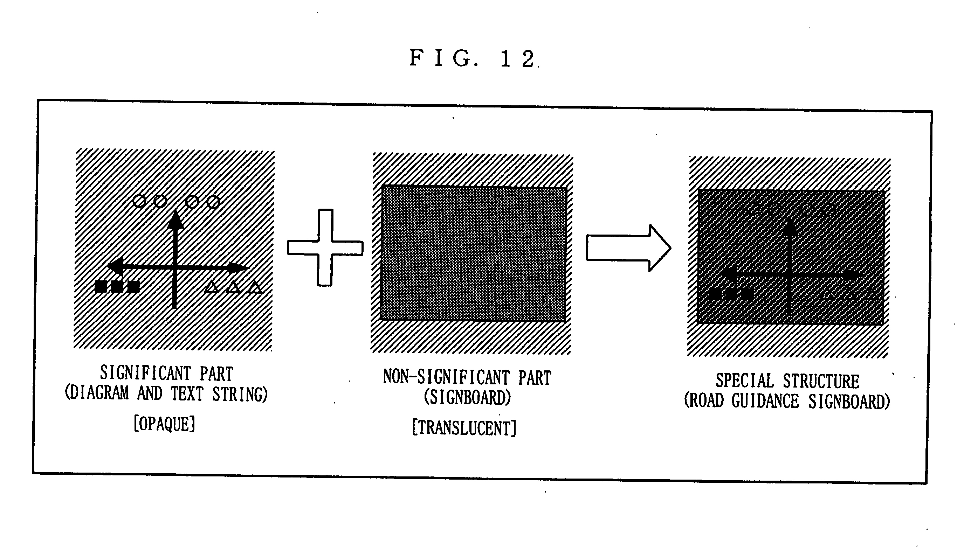

Although the present embodiment illustrates an example where a building accommodating a bookstore is displayed as a special structure to be superimposed on a 3D map, the same principle applies to the case of displaying a road sign such as a speed limit sign or a wrong way sign, or a road guidance signboard. An exemplary image of a speed limit sign is shown in FIG. 11, and an exemplary image of a road guidance signboard is shown in FIG. 12.

In the exemplary sign shown in FIG. 11, a text string "40", which is a visual representation of a speed limit, constitutes a significant part, whereas a diagram (circular frame) around the text string "40" constitutes a non-significant part. Accordingly, the text string "40" is displayed as an opaque image, whereas the circular frame around it is displayed as a translucent image (or alternatively, the entire signboard including the circular frame but except for the text string "40" may be displayed as a translucent image). In the exemplary signboard shown in FIG. 12, text strings "○○○" and the like, which are visual representations of distant destinations, constitute significant parts, whereas the signboard itself constitutes a non-significant part. As a result, the text strings "○○○" and the like are displayed as opaque images, whereas the signboard itself is displayed as a translucent image.

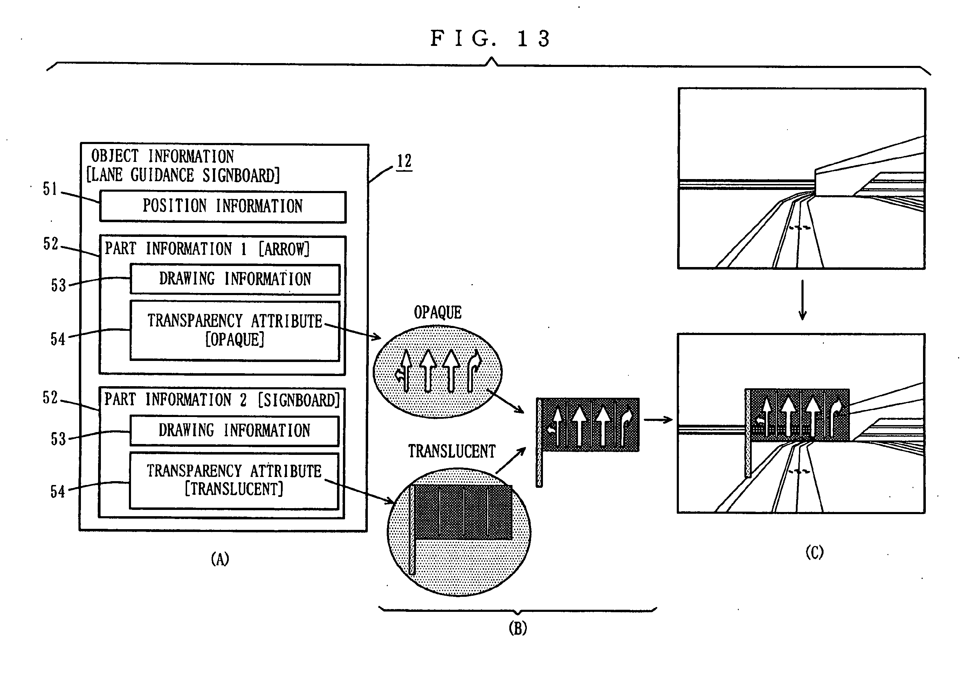

In some cases, lane guidance signboards may be displayed as mere objects similar to special structures, without functioning as navigation guidance signboards. Such a lane guidance signboard displayed as a special structure will typically include arrows all of which are displayed in the same color (e.g., white), as opposed to the aforementioned lane guidance signboard (see FIG. 6) functioning as a navigation guidance signboard, in which only the arrow corresponding to a direction to proceed is displayed in a different color among a plurality of arrows respectively corresponding to various lanes. For comparison, FIG. 13 shows a lane guidance signboard being displayed as a mere object superimposed on a 3D map, where (A) is the structure of information (object information 12 [lane guidance signboard]) pertaining to this signboard; (B) is an exemplary image of the signboard; and (C) is an overall image of the signboard being superimposed on the 3D map.

An important difference between a lane guidance signboard functioning as a navigation guidance signboard (FIG. 6) and a lane guidance signboard displayed as a special structure (FIG. 13) is that the object information 12 in the former case includes direction information 31, whereas the object information 12 in the latter case includes position information 51.

Thus, according to the present embodiment of the invention, when providing navigation by displaying a navigation guidance signboard as a superimposed image on a 3D map, "non-opaque" is set as the predetermined transparency attribute 34 for the signboard which constitutes a non-significant part, whereas "opaque" is set as the predetermined transparency attribute 34 for a diagram and/or a text string indicative of navigation guidance, which constitutes a significant part. As a result, the navigation guidance signboard superimposed on a 3D map is displayed in such a manner that the diagram and/or text string appears opaque, whereas the signboard appears non-opaque. Thus, a user can visually recognize a diagram and/or a text string indicative of navigation guidance without fail. In addition, since it is possible to see through the signboard (except for portions corresponding to the diagram and/or text string) to the underlying 3D map, the user can know in advance what sort of driving operation is required in order to follow along the navigation guidance, whereby driving in accordance with the navigation guidance can be facilitated.

In the case of displaying a special structure as a superimposed image on a 3D map, "non-opaque" is set as the predetermined transparency attribute 44 for the structure itself, which constitutes a non-significant part, whereas "opaque" is set as the predetermined transparency attribute 44 for the signboard shown on the structure, which is a significant part indicative of what the structure is (or what sort of business entity is accommodated in the structure). As a result, the special structure superimposed on a 3D map is displayed in such a manner that the signboard appears opaque, whereas the structure itself appears non-opaque. Thus, a user can visually recognize the signboard indicative of what the structure is (or what sort of business entity is accommodated therein) without fail, and yet see through the structure itself (except for the portion corresponding to the signboard) to the roads, streets, buildings, etc., which are present on the 3D map.

In the case where a road sign or a guidance signboard is displayed as a mere object superimposed on a 3D map, "non-opaque" is set as the predetermined transparency attribute 54 for the signboard, which constitutes a non-significant part, whereas "opaque" is set as the predetermined transparency attribute 54 for the diagram and/or text string, which is a significant part indicative of traffic regulations or road guidance. As a result, the road sign or guidance signboard superimposed on a 3D map is displayed in such a manner that the diagram and/or text string appears opaque, whereas the signboard appears non-opaque. Thus, the user can visually recognize the diagram and/or text string indicative of traffic regulations (e.g., speed limits or wrong ways) or road guidance without fail, and yet easily see through the signboard (except for the portion corresponding to the diagram and/or text string) to the roads, streets, buildings, etc., which are present on the 3D map.

Although the above-described special structure displaying process (step S4 in FIG. 3) illustrates an example where a special structure in the neighborhood of the current position is displayed, it would also be applicable to wait for a destination location to be inputted, and display a special structure which is in the neighborhood of the destination location.

Alternatively, without relying on the current positions or destination location, the user may select a desired business entity, e.g., by designating the name, address, telephone number, or the like of a business entity, and a special structure accommodating the selected business entity may be displayed. In this case, if the user selects a "bookstore", for example, a building accommodating the bookstore, with an opaque signboard shown on a transparent building, is displayed as a superimposed image on a 3D map.

Alternatively, responsive to a special structure being selected as a destination location, the special structure selected as the destination location may be displayed. For example, as one method for designating a destination location for a route search, a method is known in which a user inputs the telephone number or the address of the building of a business entity. Responsive to the selection of a special structure as a destination location based on the inputting of a telephone number or an address, a special structure selected as the destination location may be displayed. For example, if the user inputs the telephone number of a "bookstore" as a destination location to head for, then a building accommodating the bookstore, with an opaque signboard shown on a transparent building, is displayed as a superimposed image on a 3D map.

Thus, in the special structure displaying process of step S4, a special structure to be superimposed on a 3D map can be selected based on various criteria. Irrespective of which special structure is to be displayed, a signboard will be displayed as an opaque image and the structure itself will be displayed as a non-opaque image through a processing procedure similar to that described above.

In the first embodiment, the transparency attribute of each of the parts composing an object to be superimposed on a 3D map (e.g., a navigation guidance signboard for navigation purposes, a special structure, and/or a road sign), is predetermined to be opaque or non-opaque depending on whether that part is significant or non-significant, such that the transparency attribute never changes. According to a second embodiment of the present invention described below, the transparency attribute of each part is predetermined to be opaque or non-opaque depending on whether that part is significant or non-significant in a manner similar to the first embodiment. However, unlike in the first embodiment, the transparency attribute of a part is dynamically changed from opaque to non-opaque as the once-significant part becomes non-significant under a predetermined condition, according to the second embodiment.

### (second embodiment)

The configuration of the navigation apparatus according to the second embodiment of the present invention is similar to that of the navigation apparatus according to the first embodiment as shown in FIG. 1. Except for the following points, the operations of the respective sections shown in FIG. 1 are also similar to the operations under the first embodiment. Therefore, in the present embodiment, only the differences from the first embodiment will be described, while omitting the detailed descriptions of any operations which are similar to that according to the first embodiment.

The storage section 4 shown in FIG. 1 has a memory map similar to that according to the first embodiment, which is shown in FIG. 2. The 3D map information 11 shown in FIG. 2 has a structure similar to that according to the first embodiment, which is shown in FIG. 4.

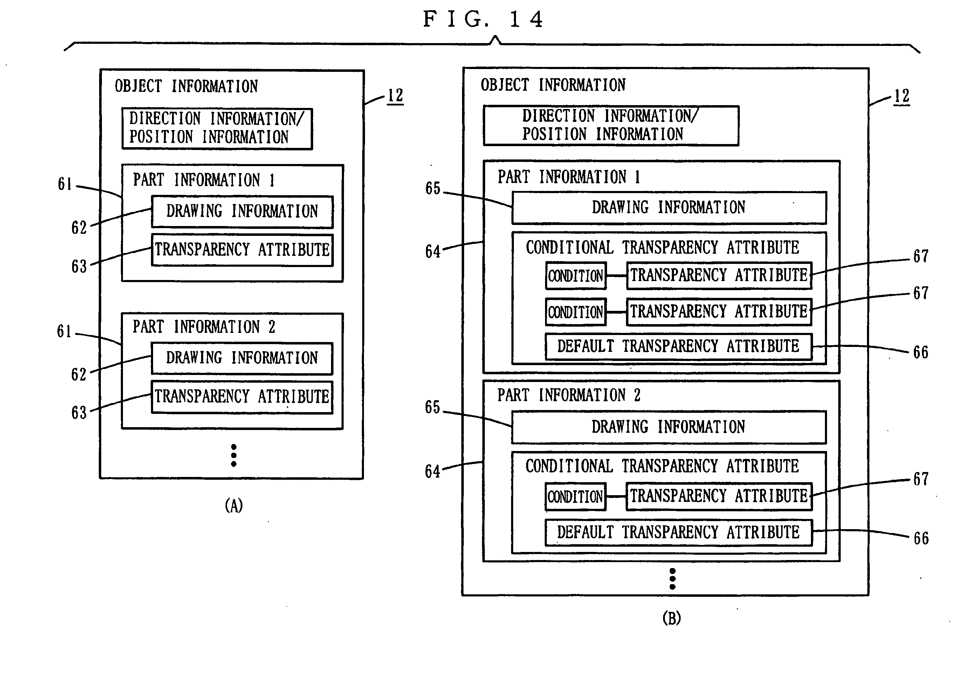

As in the first embodiment, the object information 12 shown in FIG. 2 includes direction information (see 31 in FIG. 6(A)) or position information (see 41 in FIG. 9(A) or 51 in FIG. 13(A)), and a plurality of units of part information (see 32 in FIG. 6(A), 42 in FIG. 9(A), or 52 in FIG. 13(A)). However, each unit of part information has a different structure from that according to the first embodiment. The differences between the structure of the part information according to the first embodiment and that according to the present embodiment can be seen from FIGS. 14A and 14B.

FIG. 14A shows the structure of part information according to the first embodiment. FIG. 14B shows the structure of the part information according to the present embodiment. In the first embodiment, as shown in FIG. 14A, each unit of part information 61 includes drawing information 62 and a predetermined transparency attribute 63. In the second embodiment, as shown in FIG. 14B, each unit of part information 64 includes drawing information 65, a predetermined transparency attribute (default transparency attribute 66) , and a transparency attribute 67 which becomes valid only under a predetermined condition.

The fundamental operation of the navigation apparatus according to the present embodiment is similar to that described in the first embodiment, which is illustrated in FIG. 3. The 3D map which is displayed at step S2 in FIG. 3 is similar to its counterpart in the first embodiment, which is shown in FIG. 4. The details of step S8 in FIG. 3 are as in the first embodiment, which are shown in FIG. 5, except for step S23 (navigation guidance signboard outputting process). Therefore, the details of step S23 (navigation guidance signboard outputting process) in FIG. 5 according to the second embodiment will be described below.

The following example illustrates the case where the navigation guidance signboard is a "lane guidance signboard having a plurality of arrows respectively corresponding to a plurality of lanes, where only the arrow corresponding to the lane (direction) to take is displayed as an opaque image and the other arrows as well as the signboard itself are displayed as a translucent image".

The "lane guidance signboard" is composed of a signboard and a plurality of arrows respectively corresponding to a plurality of lanes, the arrows being shown on the signboard. Whereas the entire group of arrows is regarded as one part in the first embodiment, the present embodiment regards each arrow as one part. Thus, the signboard itself constitutes a part; a right turn arrow constitutes another; a straight arrow constitutes still another; and a left turn arrow constitutes yet another.

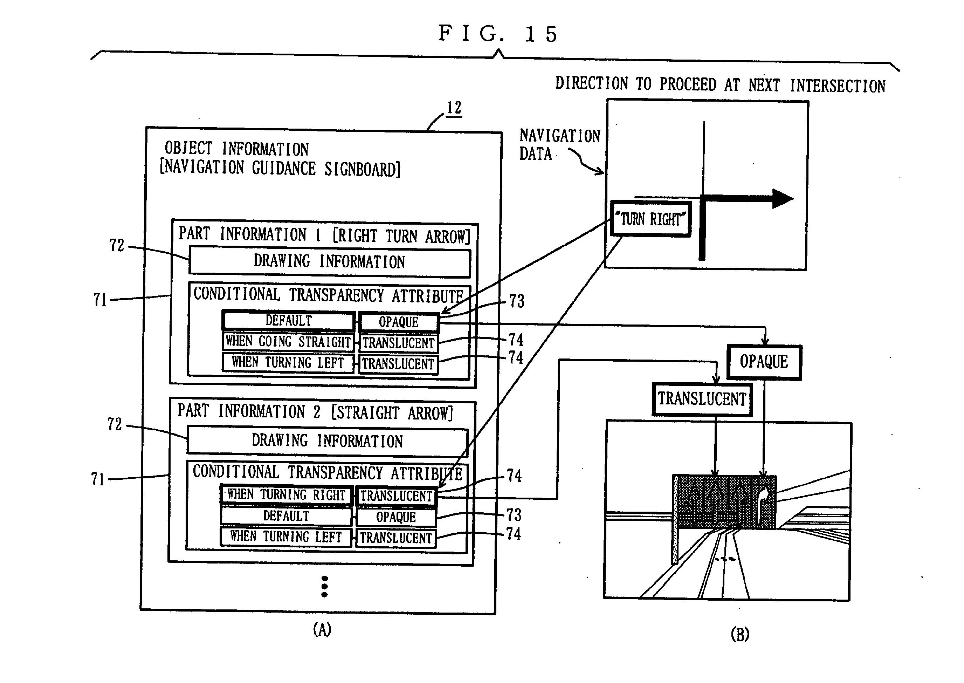

FIG. 15 is a diagram illustrating (A) the structure of the object information 12 [navigation guidance signboard] stored in the storage section 4 shown in FIG. 1, and (B) an overall image of a signboard, which is drawn based on that information, being superimposed on the 3D map.

As shown in (A) of FIG. 15, object information 12 stored in the storage section 4 includes information (part information 71) concerning each of the parts composing the navigation guidance signboard (where the signboard itself constitutes a part; a right turn arrow shown thereon constitutes another; and a straight arrow shown thereon constitutes still another). Note, however, that only two units of part information 71, one for the right turn arrow and one for the straight arrow are shown in (A) of FIG. 15 for conciseness.

Each unit of part information 71 includes: drawing information 72 for drawing a part, where the information includes the shape, color, etc., of the part; a default transparency attribute 73 which indicates whether the part is to be displayed as an opaque image or a non-opaque image; one or more conditions; and one or more transparency attribute 74 associated with the respective conditions. As for the right turn arrow, the default transparency attribute 73 is [opaque]; the transparency attribute 74 which becomes valid only under the condition [when going straight] is [translucent]; the transparency attribute 74 which becomes valid only under the condition [when turning left] is also [translucent]. As for the straight arrow, the default transparency attribute 73 is [opaque]; the transparency attribute 74 which becomes valid only under the condition [when turning right] is [translucent]; and the transparency attribute 74 which becomes valid only under the condition [when turning left] is also [translucent].

Although not shown, the signboard itself includes drawing information and a default transparency attribute [translucent], but does not include a conditional transparency attribute. Although the present example assumes [translucent] as the transparency attribute which is set for the non-significant signboard so that the signboard is displayed as a translucent image, [transparent] may instead be set as the transparency attribute for the signboard, so that the signboard is displayed as a transparent image.

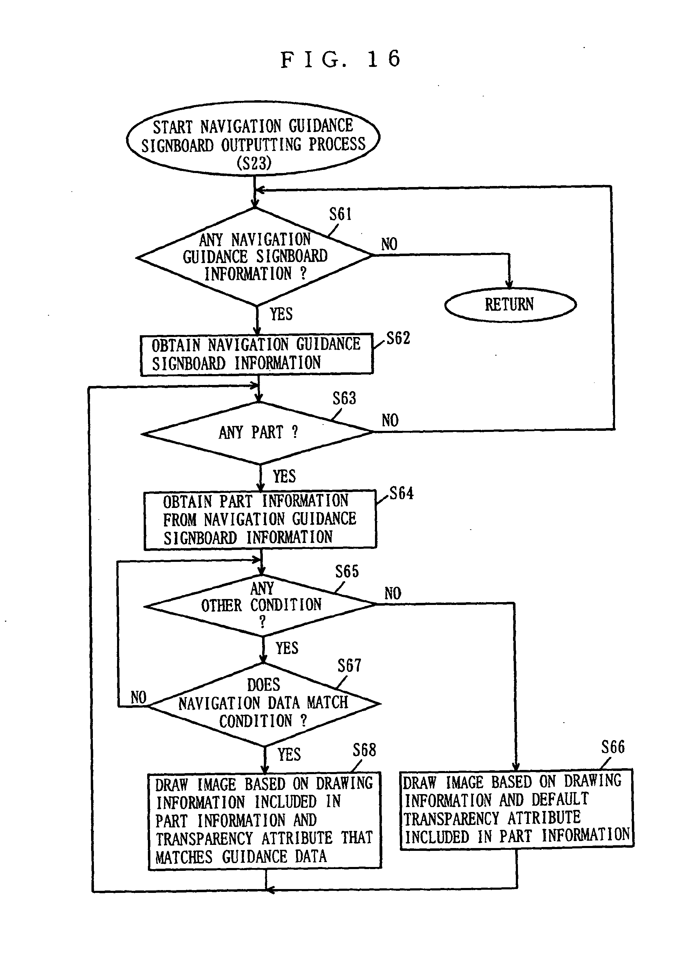

FIG. 16 is a flowchart illustrating the details of step S23 (navigation guidance signboard outputting process) in FIG. 5. In FIG. 16, the control section 9 first determines whether or not object information 12 [navigation guidance signboard] is present in the storage section 4 (step S61). If the result of the determination is negative, the control returns to the flow of FIG. 3 to execute step S9.

If the result of the determination at step S61 is affirmative, the control section 9 obtains object information 12 [navigation guidance signboard] from the storage section 4 (step S62). Next, it is determined whether or not the object information 12 includes part information 71 (step S63). If the result of the determination is negative, the control returns to step S61.

If the result of the determination at step S63 is affirmative, the control section 9 retrieves part information 71 from the object information 12 obtained at step S62 (step S64), and determines whether or not a condition is set within the part information 71 (step S65). If the result of the determination is negative, the control section 9 performs a drawing process in accordance with the drawing information 72 and the default transparency attribute 73 included in the part information 71 retrieved at step S64, using the image data 13 stored in the storage section 4. The control section 9 outputs the resultant navigation guidance signboard via the output section 6 (step S66). Thereafter, the control returns to step S63, and similar processes are repeated for the other parts as described above.

If the result of the determination at step S65 is affirmative, it is determined whether or not a condition which is set within the part information 71 retrieved at step S64 matches a direction which is indicated by the navigation data generated at step S22 (step S67). If the result of the determination is negative, the control returns to step S65 to determine whether there is any other condition or not. If there are no other conditions, the control proceeds to step S66 to perform drawing based on the default transparency attribute 73.

If the result of the determination at step S67 is affirmative, the control section 9 performs a drawing process in accordance with the drawing information 72 included in the part information 71 retrieved at step S64 and a transparency attribute 74 which corresponds to the direction indicated by the navigation data (i.e., the transparency attribute 74 which becomes valid only under that condition), using the image data 13 stored in the storage section 4. The control section 9 outputs the resultant navigation guidance signboard via the output section 6 (step S68). Thereafter, the control returns to step S63, and similar processes are repeated for the other parts as described above.

For example, assume that two units of part information 71 shown in (A) of FIG. 15, i.e., information concerning a right turn arrow and information concerning a straight arrow, are retrieved at step S64. In this case, as for the right turn arrow, the default transparency attribute 73 is [opaque], and the transparency attribute 74 which becomes valid only under the condition [when going straight] is [translucent]; and the transparency attribute 74 which becomes valid only under the condition [when turning left] is also [translucent]. As for the straight arrow, the default transparency attribute 73 is [opaque]; the transparency attribute 74 which becomes valid only under the condition [when turning right] is [translucent]; and the transparency attribute 74 which becomes valid only under the condition [when turning left] is also [translucent].

If the direction indicated by the navigation data is "TURN RIGHT", the right turn arrow is drawn based on the default transparency attribute [opaque] because no condition that matches "TURN RIGHT" is set for the right turn arrow. On the other hand, the straight arrow is drawn based on the transparency attribute [translucent] when turning right because a condition that matches "TURN RIGHT" is set for the straight arrow. The signboard itself, for which no particular condition is set, is drawn based on the default transparency attribute [opaque].

As a result, a navigation guidance signboard is outputted at step S23 such that only the right turn arrow which matches the direction indicated by the navigation data (i.e., "TURN RIGHT" in this case) appears opaque, with the straight and other arrows as well as the signboard itself appearing translucent.

Alternatively, by setting [transparent] as the transparency attribute for the signboard itself, a navigation guidance signboard will be outputted such that only the right turn arrow appears opaque and the straight and other arrows appear translucent, with the signboard itself appearing transparent.

A 3D map is being displayed on the display device by the process of step S2. On this 3D map, as shown in (B) of FIG. 15, the aforementioned navigation guidance signboard, where only the right turn arrow appears opaque and the other arrows and the signboard itself appear translucent, is superimposed. Based on the one arrow which appears opaque, the user will know that the user needs to go down the rightmost lane and turn right at the next intersection in order to proceed along the optimum route to the destination location.

A main characteristic of the above navigation guidance signboard is that only the straight arrow, which is considered significant because of indicating navigation guidance, is displayed as an opaque image, whereas the non-significant parts, i.e., the straight and other arrows as well as the signboard are displayed as translucent images. By displaying such a signboard as a superimposed image on the 3D map, the user will be able to see through to the roads, streets, buildings, etc., lying ahead of the signboard, and yet clearly recognize the straight arrow because it is not obscured by any underlying roads, streets, or buildings.

Note that a navigation guidance signboard which is displayed according to the first embodiment is such that all of the arrows thereon appear opaque except for one arrow indicating a direction to proceed, which is displayed in a different color from the other arrows. On the other hand, a navigation guidance signboard according to the present embodiment is displayed in such a manner that only the arrow indicating a direction to proceed appears opaque, with all the other arrows being translucent (or transparent) . As a result, only the arrow which is essential to the navigation guidance can be clearly recognized, and yet it is possible to see through the other arrows and the signboard to the roads, streets, buildings, etc., lying ahead of the signboard. In other words, since the arrows which are not essential to the navigation guidance are displayed as translucent images, it is possible to see through a broader area of the signboard than under the first embodiment and it becomes even easier for the user to drive a vehicle in accordance with the navigation guidance.

Thus, step 23 (navigation guidance signboard outputting process) in FIG. 5 has been described.

Referring back to FIG. 3, the details of step S4 are as in the first embodiment, which are shown in FIG. 8, except for step S42 (special structure outputting process). Therefore, the details of step S42 (special structure outputting process) in FIG. 8 will be described below.

The following example illustrates the case where the special structure is a "building accommodating a bookstore". The "building accommodating a bookstore" is composed of two parts, i.e., the building itself and a signboard shown on the building for indicating that a bookstore is accommodated in the building.

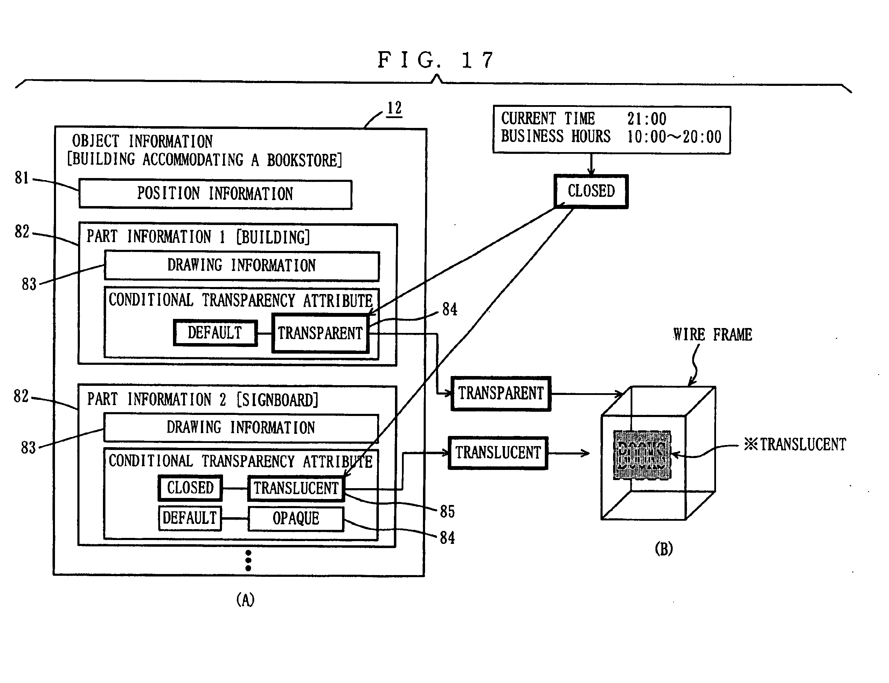

FIG. 17 is a diagram illustrating (A) the structure of object information 12 [building accommodating a bookstore] stored in the storage section 4 shown in FIG. 1, and (B) an exemplary image of a building accommodating a bookstore which is drawn based on that information.

As shown in (A) of FIG. 17, the object information 12 [building accommodating a bookstore] stored in the storage section 4 includes information (position information 81) indicating the position of the object, and information (part information 82) concerning each of the parts composing the object (where the building itself constitutes a part, and the signboard shown on the building constitutes another)

Each unit of part information 82 includes: drawing information 83 for drawing a part, where the information includes the shape, color, etc., of the part; and a default transparency attribute 84 which indicates whether the part is to be displayed as an opaque image or a non-opaque image (which in the present example is assumed to be a transparent wire frame image).

As shown in (A) of FIG. 17, [opaque] is set as the default transparency attribute 84 for the signboard, which constitutes a significant part, and [transparent] is set as the default transparency attribute 84 for the non-significant building itself.

As for the signboard, [translucent] is set as a transparency attribute 85 which becomes valid only under the condition [closed (i.e., the business entity is not operating)], in addition to the default transparency attribute 84.

Accordingly, as shown in (B) of FIG. 17, the "building accommodating a bookstore" will be displayed in such a manner that the building itself appears as a transparent and three-dimensional wire frame, etc., whereas the signboard (bearing a text string "BOOKS" in this example) usually appears opaque but translucent when the bookstore is closed.

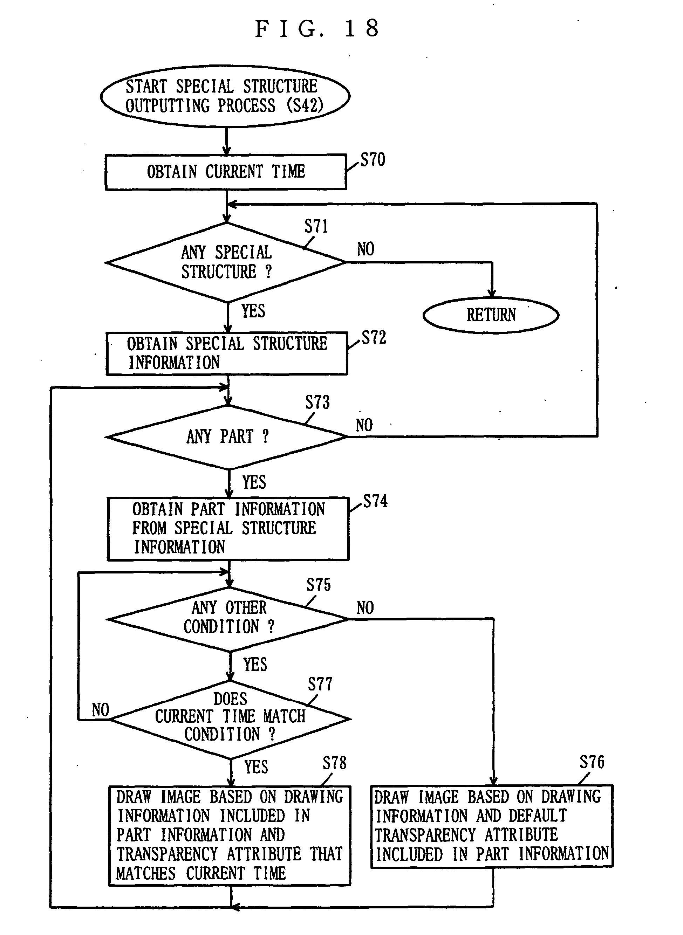

FIG. 18 is a flowchart illustrating the details of step S42 (special structure outputting process) in FIG. 8. In FIG. 18, the control section 9 first obtains the current time (step S70), and then determines whether or not object information 12 [building accommodating a bookstore] is present in the storage section 4 (step S71). If the result of the determination is negative, the control returns to the flow of FIG. 3 to execute step S9.

If the result of the determination at step S71 is affirmative, the control section 9 obtains object information 12 from the storage section 4 (step S72). Then, it is determined whether or not the object information 12 includes part information 82 (step S73). If the result of the determination is negative, the control returns to step S71.

If the result of the determination at step S73 is affirmative, the control section 9 retrieves part information 82 from the object information 12 obtained at step S72 (step S74), and determine whether or not a condition is set within the part information 82 (step S75). If the result of the determination is negative, the control section 9 performs a drawing process in accordance with the drawing information 83 and the default transparency attribute 84 included in the part information 82 retrieved at step S74, using the image data 13 stored in the storage section 4. The control section 9 outputs the resultant special structure via the output section 6 (step S76). Thereafter, the control returns to step S73, and similar processes are repeated for the other parts as described above.

If the result of the determination at step S75 is affirmative, it is determined whether a condition which is set within the part information 82 retrieved at step S74 matches the current time as obtained at step S60 (step S77). If the result of the determination is negative, the control returns to step S75 to determine whether there is any other condition or not. If there are no other conditions, the control proceeds to step S76 to perform drawing based on the default transparency attribute 84.

If the result of the determination at step S77 is affirmative (i.e., the bookstore is currently closed), the control section 9 performs a drawing process in accordance with the drawing information 83 included in the part information 82 retrieved at step S74 and the transparency attribute 85 corresponding to a condition that matches the current time (i.e., the transparency attribute 85 which becomes valid only under that condition) , using the image data 13 stored in the storage section 4. The control section 9 outputs the resultant special structure via the output section 6 (step S78). Thereafter, the control returns to step S73, and similar processes are repeated for the other parts as described above.

For example, assume that two units of part information 82 shown in (A) of FIG. 17, i.e., information concerning a building and information concerning a signboard are retrieved at step S74. In this case, as for the building, the default transparency attribute 84 is [transparent], and no condition is set. As for the signboard, the default transparency attribute 84 is [opaque], and a condition [closed] is set, and the transparency attribute 85 which becomes valid only under the condition [closed] is [translucent].

If the business hours of the bookstore are between "10:00 - 20:00" and if the current time obtained at step S70 is "21:00", the signboard will be drawn based on the transparency attribute [translucent] which becomes valid only under the condition [closed] because the current time matches the condition [closed]. On the other hand, the building, for which no particular condition is set, is drawn based on the default transparency attribute [transparent].

On the other hand, if the current time is "19:00", the signboard will also be drawn based on its default transparency attribute [opaque] because no condition is set that matches such time.

As a result, a special structure [building accommodating a bookstore] is outputted at step S42 such that the signboard appears translucent when the current time matches the condition [closed] (i.e., when the bookstore is currently closed) and otherwise (i.e., when the bookstore is operating) opaque, with the building itself always appearing transparent.

Alternatively, by setting [translucent] as the default transparency attribute 84 for the building itself, a special structure [building accommodating a bookstore] will be outputted such that both the signboard and the building itself appear translucent when the bookstore is currently closed.

A 3D map is being displayed on the display device by the process of step S2. On this 3D map, as shown in (B) of FIG. 17, the aforementioned special structure, where the building always appears transparent but the signboard usually (i.e., during business hours) appears opaque but translucent when the bookstore is closed, is superimposed.

In the first embodiment, a signboard which is considered significant because of indicating that a bookstore is accommodated in the building always appears opaque, and the non-significant building itself (except for the portion corresponding to the signboard) always appears transparent. The present embodiment is similar to the first embodiment in that the building itself always appears transparent, but differs from the first embodiment in that the signboard appears translucent, rather than opaque, when the bookstore is closed. The rationale behind this is that the signboard is significant only while the business entity is operating but becomes non-significant when the business entity is closed.

As a result, the user will only grasp the positions (on the 3D map) of special structures accommodating business entities which are operating. Since the signboard of any closed business entity is displayed as a translucent image, the portions which would be concealed under the signboard according to the first embodiment will become visible according to the second embodiment. As a result, the positions (on the 3D map) of special structures accommodating business entities which are operating can be grasped with an increased certainty.

Although the present embodiment illustrates a building accommodating a bookstore as a special structure to be superimposed on a 3D map, the same principle also applies to the case of displaying a road sign such as a speed limit sign or a wrong way sign, or a road guidance signboard.

For example, some wrong way regulations or no-parking regulations may be lifted during a specific time zone such as night hours or on Sundays. Such signs may be usually displayed as opaque images but can be switched to translucent images during the time zone when the corresponding regulations are lifted.

As described above, according to the present embodiment, when providing navigation guidance, a lane guidance signboard with a plurality of arrows is displayed in such a manner that only the arrow indicating a direction to proceed appears opaque, with all the other arrows being non-opaque. As a result, the user can clearly recognize only the arrow indicating navigation guidance, and yet see through the signboard (except for the portion corresponding to the arrow indicating the direction to proceed) to the 3D map. In other words, more arrows are displayed as non-opaque images than in the first embodiment, where a lane guidance signboard (as a navigation guidance signboard) is displayed in such a manner that all of the arrows are opaque and only the arrow indicating the direction to proceed is displayed in a different color. Since it is possible to see a broader area of the 3D map through the signboard (except for the portion corresponding to the opaque arrow) than under the first embodiment, the roads, streets, buildings, etc., which are already present on the 3D map can be viewed even better. As a result, it becomes even easier for the user to drive a vehicle in accordance with the navigation guidance.

Moreover, when a special structure bearing a signboard is displayed, a signboard which is usually displayed as an opaque image can be displayed as a non-opaque image during a predetermined time zone.

In the first embodiment, a special structure which is a "building accommodating a bookstore" is displayed in such a manner that the building always appears non-opaque, whereas the signboard always appears opaque. The present embodiment is similar to the first embodiment in that the building itself always appears non-opaque, but differs from the first embodiment in that the signboard appears non-opaque, rather than opaque, when the current time falls in a time zone during which the bookstore is closed. Thus, more parts are displayed as non-opaque images, and a broader range of the 3D map can be seen through the non-opaque parts than in the first embodiment, so that the roads, streets, buildings, etc., which are already present on the 3D map can be viewed even better.

When a road sign is displayed as a superimposed image on a 3D map, a diagram and/or a text string which is usually displayed as opaque images can be displayed as non-opaque images during a predetermined time zone.

In the first embodiment, a diagram and/or a text string is always displayed as non-opaque images, and the signboard is always displayed as an opaque image. The present embodiment is similar to the first embodiment in that the signboard always appears non-opaque, but differs from the first embodiment in that the diagram and/or text string is displayed as a non-opaque image, rather than an opaque image, when the current time falls in a time zone during which a traffic regulation represented by the diagram and/or text string is lifted. Thus, more parts are displayed as non-opaque images, and a broader range of the 3D map can be seen through the non-opaque parts than in the first embodiment, so that the roads, streets, buildings, etc., which are already present on the 3D map can be viewed even better.

## Claims

1. A three-dimensional map and object displaying apparatus for displaying an object for visually conveying predetermined information to a user as a superimposed image on a three-dimensional map,
wherein the object includes a plurality of parts, the plurality of parts comprising a significant part and a non-significant part,
wherein the three-dimensional map and object displaying apparatus comprises:
storage means (4) for storing drawing information and a predetermined transparency attribute for each part, the transparency attribute designating "opaque" or "non-opaque" in relation to a significance level of the part, wherein, for the significant part, the storage means stores: the predetermined transparency attribute designating "opaque", a predetermined condition, and a conditional transparency attribute designating "non-opaque" which becomes valid only under the predetermined condition;
map displaying means (6, 9, S2) for displaying the three-dimensional map; and
object displaying means (6, 9, S4, S8) for performing a drawing process based on the drawing information and the transparency attribute for each part stored in the storage means, thereby displaying an object as a superimposed image on the three-dimensional map being displayed by the map displaying means, such that the significant part appears as an opaque image and the non-significant part appears as a non-opaque image, wherein the object displaying means determines (S67, S77) whether or not the significant part satisfies the condition, and displays the significant part as a non-opaque image if a result of the determination is affirmative.

2. The three-dimensional map and object displaying apparatus according to claim 1,
wherein the object is a navigation guidance signboard comprising a signboard and a diagram and/or a text string shown on the signboard for visually representing navigation guidance, such that the diagram and/or text string corresponds to the significant part and the signboard corresponds to the non-significant part,
wherein the storage means stores "non-opaque" as the predetermined transparency attribute for the signboard, and "opaque" as the predetermined transparency attribute for the diagram and/or text string, and
wherein the object displaying means displays the diagram and/or text string as an opaque image, and the signboard as a non-opaque image.

3. The three-dimensional map and object displaying apparatus according to claim 1,
wherein, the object is a lane guidance signboard comprising a signboard and a plurality of arrows shown on the signboard for representing respectively different lanes, such that the plurality of arrows respectively correspond to a plurality of said significant parts and the signboard corresponds to the non-significant part,
wherein the storage means stores "non-opaque" as the predetermined transparency attribute for the signboard, and "opaque" as the predetermined transparency attribute for each arrow, and
wherein the object displaying means displays each arrow as an opaque image, and the signboard as a non-opaque image.

4. The three-dimensional map and object displaying apparatus according to claim 1,
wherein the object comprises a special structure and a signboard accompanying the structure for visually representing an attribute of the structure, such that the signboard corresponds to the significant part and the special structure corresponds to the non-significant part,
wherein the storage means stores,
"non-opaque" as the predetermined transparency attribute for the special structure,
"opaque" as the predetermined transparency attribute for the signboard, and
wherein the object displaying means displays the signboard as an opaque image, and the special structure as a non-opaque image.

5. The three-dimensional map and object displaying apparatus according to claim 4, further comprising selection means (5) for selecting one of a plurality of said special structures,
wherein, for the signboard, the storage means stores: the predetermined transparency attribute designating "opaque" and a conditional transparency attribute designating "non-opaque" which becomes valid only when the special structure is unselected, and
wherein the object displaying means displays the signboard accompanying any said special structure that is selected by the selection means as an opaque image, and the signboard accompanying any said special structure that is unselected as an non-opaque image.

6. The three-dimensional map and object displaying apparatus according to claim 4,
wherein, for the signboard, the storage means stores: the predetermined transparency attribute designating "opaque", a predetermined time zone, and a conditional transparency attribute designating "non-opaque" which becomes valid only during the time zone, and
wherein the object displaying means determines (S77) whether or not the current time falls in the time zone, and displays the signboard as a non-opaque image if a result of the determination is affirmative.

7. The three-dimensional map and object displaying apparatus according to claim 1,
wherein the object is a road sign comprising a signboard and a diagram and/or a text string shown on the signboard for visually representing a traffic regulation, such that the diagram and/or text string corresponds to the significant part and the signboard corresponds to the non-significant part,
wherein the storage means stores:
"non-opaque" as the predetermined transparency attribute for the signboard,
"opaque" as the predetermined transparency attribute for the diagram and/or text string, and
wherein the object displaying means displays the signboard as a non-opaque image, and the diagram and/or text string as an opaque image.

8. The three-dimensional map and objet displaying apparatus according to claim 7,
wherein, for the diagram and/or text string, the storage means stores: the predetermined transparency attribute designating "opaque", a predetermined time zone, and a conditional transparency attribute designating "non-opaque" which becomes valid only during the time zone, and
wherein the object displaying means determines whether or not the current time falls in the time zone, and displays the diagram and/or text string as a non-opaque image if a result of the determination is affirmative.

9. A three-dimensional map and object displaying method for displaying an object for visually conveying predetermined information to a user as a superimposed image on a three-dimensional map,
wherein the object includes a plurality of parts, the plurality of parts comprising a significant part and a non-significant part,
wherein the three-dimensional map and object displaying method comprises:
a storage step of storing drawing information and a predetermined transparency attribute for each part, the transparency attribute designating "opaque" or "non-opaque" in relation to a significance level of the part, wherein, for the significant part, the storage means stores: the predetermined transparency attribute designating "opaque", a predetermined condition, and a conditional transparency attribute designating "non-opaque" which becomes valid only under the predetermined condition;
a map displaying step (S2) of displaying the three-dimensional map; and
an object displaying step (S4, S8) of performing a drawing process based on the drawing information and the transparency attribute for each part stored in the storage step, thereby displaying an object as a superimposed image on the three-dimensional map being displayed by the map displaying step, such that the significant part appears as an opaque image and the non-significant part appears as a non-opaque image, wherein the object displaying means determines (S67, S77) whether or not the significant part satisfies the condition, and displays the significant part as a non-opaque image if a result of the determination is affirmative.

10. A three-dimensional map and object displaying program for performing the three-dimensional map and object displaying method in accordance with claim 9.

11. A three-dimensional navigation apparatus for providing navigation by displaying a navigation guidance signboard as a superimposed image on a three-dimensional map,
wherein the navigation guidance signboard comprises a signboard and a diagram and/or a text string shown on the signboard for visually representing navigation guidance,
wherein the three-dimensional navigation apparatus comprises:
storage means for storing: a predetermined transparency attribute designating "non-opaque" and drawing information for the signboard; and a predetermined transparency attribute designating "opaque" and drawing information for the diagram and/or text string;
map displaying means (6, 9, S2) for displaying the three-dimensional map; and
navigation guidance signboard displaying means (6, 9, S8) for performing a drawing process based on the drawing information and the transparency attribute stored in the storage means, thereby displaying a navigation guidance signboard as a superimposed image on the three-dimensional map being displayed by the map displaying means, such that the diagram and/or text string appears as an opaque image and the signboard appears as a non-opaque image.

12. The three-dimensional navigation apparatus according to claim 11,
wherein the diagram and/or text string comprises a plurality of arrows visually representing respectively different lanes,
wherein the three-dimensional navigation apparatus further comprises search means (7, 9) for searching for an optimum route based on a current position of a vehicle, determining a direction for the vehicle to proceed, and informing the navigation guidance signboard displaying means of the direction,
wherein, for each arrow, the storage means stores: the predetermined transparency attribute designating "opaque", a direction represented by the arrow, and a conditional transparency attribute designating "non-opaque" which becomes valid only when the direction for the vehicle to proceed is inconsistent with the direction represented by the arrow, and
wherein, for each arrow, the navigation guidance signboard displaying means determines whether or not the direction for the vehicle to proceed is inconsistent with the direction represented by the arrow, and displays any said arrow for which a result of the determination is negative as an opaque image, and any said arrow for which a result of the determination is affirmative as a non-opaque image.

13. The three-dimensional navigation apparatus according to claim 11, further comprising selection means (5) for selecting one of a plurality of said special structures as a destination location,
wherein, for the signboard, the storage means stores: the predetermined transparency attribute designating "opaque" and a conditional transparency attribute designating "non-opaque" which becomes valid only when the special structure is unselected, and
wherein the object displaying means displays the signboard accompanying any said special structure that is selected by the selection means to be the destination location as a non-opaque image, and the signboard accompanying any said special structure that is unselected as a non-opaque image.

14. A three-dimensional navigation method for providing navigation by displaying a navigation guidance signboard as a superimposed image on a three-dimensional map,
wherein the navigation guidance signboard comprises a signboard and a diagram and/or a text string shown on the signboard for visually representing navigation guidance,
wherein the three-dimensional navigation method comprises:
a storage step of storing: a predetermined transparency attribute designating "non-opaque" and drawing information for the signboard; and a predetermined transparency attribute designating "opaque" and drawing information for the diagram and/or text string;
a map displaying step (S2) of displaying the three-dimensional map; and
a navigation guidance signboard displaying step (S8) of performing a drawing process based on the drawing information and the transparency attribute stored in the storage step, thereby displaying a navigation guidance signboard as a superimposed image on the three-dimensional map being displayed by the map displaying step, such that the diagram and/or text string appears as an opaque image and the signboard appears as a non-opaque image.

15. A three-dimensional navigation program executed by a computer comprised in an apparatus for providing navigation by displaying a navigation guidance signboard as a superimposed image on a three-dimensional map,
wherein the navigation guidance signboard comprises a signboard and a diagram and/or a text string shown on the signboard for visually representing navigation guidance,
wherein the three-dimensional navigation program comprises:
a storage step of storing: a predetermined transparency attribute designating "non-opaque" and drawing information for the signboard; and a predetermined transparency attribute designating "opaque" and drawing information for the diagram and/or text string;
a map displaying step (S2) of displaying the three-dimensional map; and
a navigation guidance signboard displaying step (S8) of performing a drawing process based on the drawing information and the transparency attribute stored in the storage step, thereby displaying a navigation guidance signboard as a superimposed image on the three-dimensional map being displayed by the map displaying step, such that the diagram and/or text string appears as an opaque image and the signboard appears as a non-opaque image.

## Patentansprüche

1. Vorrichtung zum Darstellen einer dreidimensionalen Landkarte und eines Objekts, die zur visuellen Übermittlung von vorgegebenen Informationen an einen Anwender ein Objekt als Bild darstellt, welches über eine dreidimensionale Landkarte gelegt ist,
wobei das Objekt eine Mehrzahl von Teilen aufweist, wobei die Mehrzahl von Teilen einen signifikanten Teil und einen nicht-signifikanten Teil umfasst,
wobei die Vorrichtung zum Darstellen einer dreidimensionalen Landkarte und eines Objekts aufweist:
eine Speichereinrichtung (4) zum Speichern von Zeichnungsinformationen und eines vorgegebenen Transparenzattributs für jeden Teil, wobei das Transparenzattribut "opak" oder "nicht-opak" in Bezug auf eine signifikante Ebene des Teils zuteilt; wobei die Speichereinrichtung für den signifikanten Teil speichert: das vorgegebene Transparentattribut, das "opak" zuteilt, eine vorgegebene Bedingung und ein bedingtes Transparentattribut, welches "nicht-opak" zuteilt und welches nur unter der vorgegebenen Bedingung gültig wird;
eine Landkarten-Darstellungseinrichtung (6, 9, S2) zum Darstellen der dreidimensionalen Landkarte; und
eine Objekt-Darstellungseinrichtung (6, 9, S4, S8) zur Durchführung eines Zeichnungsprozesses auf Basis der Zeichnungsinformationen und des Transparenzattributs für jeden Teil, welches in der Speichereinrichtung gespeichert ist, wodurch ein Objekt als Bild, welches über die dreidimensionale Landkarte gelegt ist, welche von der Landkarten-Darstellungseinrichtung dargestellt wird, so dargestellt wird, dass der signifikante Teil als opakes Bild erscheint und der nicht-signifikante Teil als nicht-opakes Bild erscheint, wobei die Objektdarstellungseinrichtung (S67, S77) bestimmt, ob der signifikante Teil die Bedingung erfüllt oder nicht, und den signifikanten Teil als nicht-opakes Bild darstellt, wenn ein Ergebnis der Bestimmung positiv ist.

2. Vorrichtung zum Darstellen einer dreidimensionale Landkarte und eines Objekts nach Anspruch 1,
wobei das Objekt eine Navigationshilfen-Anzeigetafel ist, welche eine Anzeigetafel und ein Diagramm und/oder eine Textfolge umfasst, welches/welche auf der Anzeigetafel gezeigt wird, um visuelle Navigationshilfe zu geben, und zwar so, dass das Diagramm und/oder die Textfolge dem signifikanten Teil entspricht und die Hinweistafel dem nicht-signifikanten Teil entspricht,
wobei die Speichereinrichtung "nicht-opak" als das vorgegebene Transparenzattribut für die Anzeigetafel speichert und "opak" als das vorgegebene Transparenzattribut für das Diagramm und/oder die Textfolge speichert, und
wobei die Objekt-Darstellungseinrichtung das Diagramm und/oder die Textfolge als opakes Bild darstellt und die Anzeigetafel als nicht-opakes Bild darstellt.

3. Vorrichtung zum Darstellen einer dreidimensionalen Landkarte und eines Objekts nach Anspruch 1,
wobei das Objekt eine Fahrspurführungs-Anzeigetafel ist, die eine Anzeigetafel und eine Mehrzahl von Pfeilen umfasst, welche auf der Anzeigetafel angezeigt werden, um verschiedene Fahrspuren anzugeben, so dass die Mehrzahl von Pfeilen jeweils einer Mehrzahl der signifikanten Teile entspricht und die Anzeigetafel dem nicht-signifikanten Teil entspricht,
wobei die Speichereinrichtung "nicht-opak" als das vorgegebene Transparenzattribut für die Anzeigetafel speichert und "opak" als das vorgegebene Transparenzattribut für jeden Pfeil speichert, und
wobei die Objekt-Darstellungseinrichtung jeden Pfeil als opakes Bild darstellt und die Anzeigetafel als nicht-opakes Bild darstellt.

4. Vorrichtung zum Darstellen einer dreidimensionalen Landkarte und eines Objekts nach Anspruch 1,
wobei das Objekt eine spezielle Struktur und eine Anzeigetafel, welche die Struktur begleitet, umfasst, um ein Attribut der Struktur visuell darzustellen, so dass die Anzeigetafel dem signifikanten Teil entspricht und die spezielle Struktur dem nicht-signifikanten Teil entspricht,
wobei die Speichereinrichtung speichert
"nicht-opak" als vorgegebenes Transparenzattribut für die spezielle Struktur,
"opak" als vorgegebenes Transparenzattribut für die Anzeigetafel, und
wobei die Objekt-Darstellungseinrichtung die Anzeigetafel als opakes Bild speichert und die spezielle Struktur als nicht-opakes Bild speichert.

5. Vorrichtung zum Darstellen einer dreidimensionalen Abbildung und eines Objekts nach Anspruch 4, des Weiteren umfassend eine Wahleinrichtung (5) zum Auswählen einer aus einer Mehrzahl der speziellen Strukturen,
wobei die Speichereinrichtung für die Anzeigetafel speichert: das vorgegebene Transparenzattribut, das "opak" zuteilt, und ein bedingtes Transparenzattribut, das "nicht-opak" zuteilt und das nur gültig wird, wenn die spezielle Struktur nicht ausgewählt ist, und
wobei die Objekt-Darstellungseinrichtung die Anzeigetafel, die irgendeine spezielle Struktur begleitet, welche von der Wahleinrichtung ausgewählt worden ist, als opakes Bild darstellt, und die Anzeigetafel, welche irgendeine spezielle Struktur begleitet, welche nicht ausgewählt ist, als nicht-opakes Bild darstellt.

6. Vorrichtung zum Darstellen einer dreidimensionalen Landkarte und eines Objekts nach Anspruch 4,
wobei die Speichereinrichtung für die Anzeigetafel speichert:
das vorgegebene Transparenzattribut, welches "opak" zuteilt, eine vorgegebene Zeitzone und ein bedingtes Transparenzattribut, welches "nicht-opak" zuteilt und welches nur während der Zeitzone gültig wird, und
wobei die Objekt-Darstellungseinrichtung (S77) bestimmt, ob die aktuelle Zeit in der Zeitzone liegt oder nicht, und die Anzeigetafel als nicht-opakes Bild darstellt, wenn ein Ergebnis der Bestimmung positiv ist.

7. Vorrichtung zum Darstellen einer dreidimensionalen Landkarte und eines Objekts nach Anspruch 1,
wobei das Objekt ein Straßenschild ist, welches eine Anzeigetafel und ein Diagramm und/oder eine Textfolge umfasst, welche auf der Anzeigetafel angezeigt wird, um eine Verkehrsregelung visuell anzugeben, so dass das Diagramm und/oder die Textfolge dem signifikanten Teil entspricht und die Anzeigetafel dem nicht-signifikanten Teil entspricht,
wobei die Speichereinrichtung speichert:
"nicht-opak" als das vorgegebene Transparenzattribut für die Anzeigetafel,
"opak" als das vorgegebene Transparenzattribut für das Diagramm und/oder die Textfolge, und
wobei die Objekt-Darstellungseinrichtung die Anzeigetafel als nicht-opakes Bild speichert und/oder die Textfolge als opakes Bild speichert.

8. Vorrichtung zum Darstellen einer dreidimensionalen Landkarte und eines Objekts nach Anspruch 7,
wobei die Speichereinrichtung für das Diagramm und/oder die Textfolge speichert: das vorgegebene Transparenzattribut, das "opak" zuteilt, eine vorgegebene Zeitzone und ein bedingtes Transparenzattribut, das "nicht-opak" zuteilt und das nur während der Zeitzone gültig wird, und
wobei die Objekt-Darstellungseinrichtung bestimmt, ob die aktuelle Zeit in der Zeitzone liegt oder nicht, und das Diagramm und/oder die Textfolge als nicht-opakes Bild darstellt, wenn ein Ergebnis der Bestimmung positiv ist.

9. Verfahren zum Darstellen einer dreidimensionalen Landkarte und eines Objekts, mit dem ein Objekt zur visuellen Übermittlung von vorgegebenen Informationen an einen Anwender als Bild dargestellt wird, welches über eine dreidimensionale Landkarte gelegt ist,
wobei das Objekt eine Mehrzahl von Teilen aufweist, wobei die Mehrzahl von Teilen einen signifikanten Teil und einen nicht-signifikanten Teil umfasst,
wobei das Verfahren zum Darstellen einer dreidimensionalen Landkarte und eines Objekts umfasst:
einen Speicherungsschritt zum Speichern von Zeichnungsinformationen und eines vorgegebenen Transparenzattributs für jeden Teil, wobei das Transparenzattribut "opak" oder "nicht-opak" in Bezug auf eine signifikante Ebene des Teils zuteilt; wobei die Speichereinrichtung für den signifikanten Teil speichert: das vorgegebene Transparenzattribut, welches "opak" zuteilt, eine vorgegebene Bedingung und ein bedingtes Transparentattribut, welches "nicht-opak" zuteilt und welches nur unter der vorgegebenen Bedingung gültig wird;
einen Landkartendarstellungsschritt (S2), in dem die dreidimensionale Landkarte dargestellt wird; und
einen Objekt-Darstellungsschritt (S4, S8), in dem ein Zeichnungsprozess auf Basis der Zeichnungsinformationen und des Transparenzattributs für jeden Teil, welcher im Speicherungsschritt gespeichert worden ist, durchgeführt wird, wodurch ein Objekt als Bild dargestellt wird, welches über die dreidimensionale Landkarte gelegt ist, welche im Landkartendarstellungsschritt dargestellt wird, so dass der signifikante Teil als opakes Bild erscheint und der nicht-signifikante Teil als nicht-opakes Bild erscheint, wobei die Objekt-Darstellungseinrichtung bestimmt (S67, S77), ob der signifikante Teil die Bedingung erfüllt oder nicht, und den signifikanten Teil als nicht-opakes Bild darstellt, wenn ein Ergebnis der Bestimmung positiv ist.

10. Programm zum Darstellen einer dreidimensionalen Landkarte und eines Objekts zur Ausführung des Verfahrens zum Darstellen einer dreidimensionalen Landkarte und eines Objekts nach Anspruch 9.

11. Dreidimensionale Navigationsvorrichtung, die eine Navigation ermöglicht durch Darstellen einer Navigationshilfen-Anzeigetafel als Bild, welches über eine dreidimensionale Landkarte gelegt ist,
wobei die Navigationshilfen-Anzeigetafel eine Anzeigetafel und ein Diagramm und/oder eine Textfolge umfasst, welches/welche auf der Anzeigetafel angezeigt wird, um visuell Navigationshilfe zu geben,
wobei die dreidimensionale Navigationsvorrichtung umfasst:
eine Speichereinrichtung, welche speichert: ein vorgegebenes Transparenzattribut, welches "nicht-opak" zuteilt, und Zeichnungsinformationen für die Anzeigetafel; und ein vorgegebenes Transparenzattribut, welches "opak" zuteilt, und Zeichnungsinformationen für das Diagramm und/oder die Textfolge;
eine Landkarten-Darstellungseinrichtung (6, 9, S2), welche die dreidimensionale Landkarte darstellt; und
eine Darstellungseinrichtung (6, 9, S8) für die Navigationshilfen-Anzeigetafel, welche einen Zeichnungsprozess auf Basis der Zeichnungsinformationen und des Transparenzattributs, welches in der Speichereinrichtung gespeichert ist, durchführt, wodurch von der Landkarten-Darstellungseinrichtung eine Navigationshilfen-Anzeigetafel als Bild dargestellt wird, welches über die dreidimensionale Landkarte gelegt ist, so dass das Diagramm als opakes Bild erscheint und die Anzeigetafel als nicht-opakes Bild erscheint.

12. Dreidimensionale Navigationsvorrichtung nach Anspruch 11,
wobei das Diagramm und/oder die Textfolge eine Mehrzahl von Pfeilen umfasst, welche jeweils unterschiedliche Fahrspuren visuell angeben,
wobei die dreidimensionale Navigationsvorrichtung ferner eine Sucheinrichtung (7, 9) zum Suchen nach einer optimalen Route auf Basis einer aktuellen Position eines Fahrzeugs, zum Bestimmen einer Richtung, in welcher das Fahrzeug weiterfährt, und zum Mitteilen der Richtung an die Navigationshilfen-Anzeigetafel umfasst,
wobei die Speichervorrichtung für jeden Pfeil speichert: das vorgegebene Transparenzattribut, welches "opak" zuteilt, eine Richtung, welche von dem Pfeil angegeben wird, und ein bedingtes Transparenzattribut, welches "nicht-opak" zuteilt und welches nur gültig wird, wenn die Richtung, in welche das Fahrzeug weiterfährt, nicht mit der Richtung übereinstimmt, welche von dem Pfeil angegeben wird, und
wobei die Darstellungseinrichtung für die Navigationshilfen-Anzeigetafel für jeden Pfeil bestimmt, ob die Richtung, in welche das Fahrzeug weiterfährt, nicht mit der Richtung übereinstimmt, welche von dem Pfeil angegeben wird, und irgendeinen solchen Pfeil, für welchen ein Ergebnis der Bestimmung negativ ist, als opakes Bild darstellt und irgendeinen solchen Pfeil, für welchen ein Ergebnis der Bestimmung positiv ist, als nicht-opakes Bild darstellt.

13. Dreidimensionale Navigationsvorrichtung nach Anspruch 11, des Weiteren umfassend eine Wahleinrichtung (5) zum Auswählen einer aus einer Mehrzahl der speziellen Strukturen als Zielort,
wobei die Speichereinrichtung für die Anzeigetafel speichert: das vorgegebene Transparenzattribut, welches "opak" zuteilt, und ein bedingtes Transparenzattribut, welches "nicht-opak" zuteilt und welches nur dann gültig wird, wenn die spezielle Struktur nicht ausgewählt ist, und
wobei die Objekt-Darstellungseinrichtung die Anzeigetafel, welche irgendeine solche spezielle Struktur begleitet, welche von der Wahleinrichtung als Zielort ausgewählt worden ist, als nicht-opakes Bild darstellt, und die Anzeigetafel, welche irgendwelche solche speziellen Strukturen begleitet, welche nicht ausgewählt sind, als nicht-opakes Bild darstellt.

14. Dreidimensionales Navigationsverfahren, welches eine Navigation ermöglicht durch Darstellen einer Navigationshilfen-Anzeigetafel als Bild, welches über eine dreidimensionale Landkarte gelegt ist,
wobei die Navigationshilfen-Anzeigetafel eine Anzeigetafel und ein Diagramm und/oder eine Textfolge umfasst, welches/welche auf der Anzeigetafel angezeigt wird, um visuell Navigationshilfen zu geben,
wobei das dreidimensionale Navigationsverfahren umfasst:
einen Speicherungsschritt, in welchem gespeichert wird:
ein vorgegebenes Transparenzattribut, welches "nicht-opak" zuteilt, und Zeichnungsinformationen für die Anzeigetafel; und ein vorgegebenes Transparenzattribut, welches "opak" zuteilt, und Zeichnungsinformationen für das Diagramm und/oder die Textfolge;
einen Landkarten-Darstellungsschritt (S2), in welchem die dreidimensionale Landkarte dargestellt wird; und
einen Schritt (S8) zum Darstellen der Navigationshilfen-Anzeigetafel, in welchem ein Zeichnungsprozess auf Basis der Zeichnungsinformationen und des Transparenzattributs, welches im Speicherungsschritt gespeichert worden ist, durchgeführt wird, wodurch im Landkarten-Darstellungsschritt eine Navigationshilfen-Anzeigetafel als Bild dargestellt wird, welches über die dreidimensionale Landkarte gelegt ist, so dass das Diagramm als opakes Bild erscheint und die Anzeigetafel als nicht-opakes Bild erscheint.

15. Dreidimensionale Navigationsprogramm, das von einem Computer ausgeführt wird, welcher in einer Navigationsvorrichtung enthalten ist, welche durch Darstellen einer Navigationshilfen-Anzeigetafel als Bild, welches über eine dreidimensionale Landkarte gelegt ist, für eine Navigation sorgt,
wobei die Navigationshilfen-Anzeigetafel eine Anzeigetafel und ein Diagramm und/oder eine Textfolge umfasst, welches/welche auf der Anzeigetafel angezeigt wird, um visuell Navigationshilfen zu geben,
wobei das dreidimensionale Navigationsprogramm umfasst:
einen Speicherungsschritt, in welchem gespeichert wird: ein vorgegebenes Transparenzattribut, welches "nicht-opak" zuteilt, und Zeichnungsinformationen für die Anzeigetafel; und ein vorgegebenes Transparenzattribut, welches "opak" zuteilt, und Zeichnungsinformationen für das Diagramm und/oder die Textfolge;
einen Landkarten-Darstellungsschritt (S2), in welchem die dreidimensionale Landkarte dargestellt wird; und
einen Schritt (S8) zum Darstellen der Navigationshilfen-Anzeigetafel, in welchem ein Zeichnungsprozess auf Basis der Zeichnungsinformationen und des Transparenzattributs, welches im Speicherungsschritt gespeichert worden ist, durchgeführt wird, wodurch im Landkarten-Darstellungsschritt eine Navigationshilfen-Anzeigetafel als Bild dargestellt wird, welches über die dreidimensionale Landkarte gelegt ist, so dass das Diagramm als opakes Bild erscheint und die Anzeigetafel als nicht-opakes Bild erscheint.

## Revendications

1. Appareil d'affichage de carte tridimensionnelle et d'objet permettant d'afficher un objet pour transmettre visuellement des informations prédéterminées à un utilisateur en tant qu'image superposée sur une carte tridimensionnelle,
où l'objet comporte une pluralité de parties, la pluralité de parties comprenant une partie significative et une partie non significative,
où l'appareil d'affichage de carte tridimensionnelle et d'objet comprend :
un moyen de stockage (4) destiné à stocker des informations de dessin et un attribut de transparence prédéterminé pour chaque partie, l'attribut de transparence désignant "opaque" ou " non-opaque" par rapport à un niveau de signification de la partie, où pour la partie significative, le moyen de stockage stocke : l'attribut de transparence prédéterminé désignant "opaque", une condition prédéterminée, et un attribut de transparence conditionnel désignant " non-opaque " qui ne devient valide que sous la condition prédéterminée ;
un moyen d'affichage de carte (6, 9, S2) destiné à afficher la carte tridimensionnelle ; et
un moyen d'affichage d'objet (6, 9, S4, S8) destiné à exécuter un processus de dessin sur la base des informations de dessin et de l'attribut de transparence pour chaque partie stockés dans le moyen de stockage, ce qui permet d'afficher un objet en tant qu'image superposée sur la carte tridimensionnelle qui est affichée par le moyen d'affichage de carte, de sorte que la partie significative apparaisse comme une image opaque et la partie non significative apparaisse comme une image non-opaque, où le moyen d'affichage d'objet détermine (S67, S77) si la partie significative satisfait la condition ou non, et affiche la partie significative en tant qu'image non-opaque si un résultat de la détermination est affirmatif.

2. Appareil d'affichage de carte tridimensionnelle et d'objet selon la revendication 1,
où l'objet est un panneau de guidage de navigation comprenant un panneau sur lequel est montré(e)/sont montrés un diagramme et/ou une chaîne de texte pour représenter visuellement un guidage de navigation, de sorte que le diagramme et/ou la chaîne de texte corresponde/correspondent à la partie significative et le panneau corresponde à la partie non significative,
où le moyen de stockage stocke "non-opaque" comme étant l'attribut de transparence prédéterminé pour le panneau, et "opaque" comme étant l'attribut de transparence prédéterminé pour le diagramme et/ou la chaîne de texte, et
où le moyen d'affichage d'objet affiche le diagramme et/ou la chaîne de texte en tant qu'image opaque, et le panneau en tant qu'image non-opaque.

3. Appareil d'affichage de carte tridimensionnelle et d'objet selon la revendication 1,
où, l'objet est un panneau de guidage de voie comprenant un panneau et une pluralité de flèches montrées sur le panneau pour représenter respectivement différentes voies, de sorte que la pluralité de flèches correspondent respectivement à une pluralité desdites parties significatives et le panneau corresponde à la partie non significative,
où le moyen de stockage stocke "non-opaque" comme étant l'attribut de transparence prédéterminé pour le panneau, et "opaque" comme étant l'attribut de transparence prédéterminé pour chaque flèche, et
où le moyen d'affichage d'objet affiche chaque flèche en tant qu'image opaque, et le panneau en tant qu'image non-opaque.

4. Appareil d'affichage de carte tridimensionnelle et d'objet selon la revendication 1,
où l'objet comprend une structure spéciale et un panneau accompagnant la structure pour représenter visuellement un attribut de la structure, de sorte que le panneau corresponde à la partie significative et la structure spéciale corresponde à la partie non significative,
où le moyen de stockage stocke,
"non-opaque" comme étant l'attribut de transparence prédéterminé pour la structure spéciale,
"opaque" comme étant l'attribut de transparence prédéterminé pour le panneau, et
où le moyen d'affichage d'objet affiche le panneau en tant qu'image opaque, et la structure spéciale en tant qu'image non-opaque

5. Appareil d'affichage de carte tridimensionnelle et d'objet selon la revendication 4, comprenant en outre un moyen de sélection (5) destiné à sélectionner l'une d'une pluralité desdites structures spéciales,
où, pour le panneau, le moyen de stockage stocke : l'attribut de transparence prédéterminé désignant "opaque" et un attribut de transparence conditionnel désignant "non-opaque" qui ne devient valide que lorsque la structure spéciale est désélectionnée, et
où le moyen d'affichage d'objet affiche le panneau accompagnant toute dite structure spéciale qui est sélectionnée par le moyen de sélection en tant qu'image opaque, et le panneau accompagnant toute dite structure spéciale qui est désélectionnée en tant qu'image non-opaque.

6. Appareil d'affichage de carte tridimensionnelle et d'objet selon la revendication 4,
où, pour le panneau, le moyen de stockage stocke : l'attribut de transparence prédéterminé désignant "opaque", une plage horaire prédéterminée, et un attribut de transparence conditionnel désignant "non-opaque" qui ne devient valide que pendant la plage horaire,
où le moyen d'affichage d'objet détermine (S77) si l'heure actuelle se trouve dans la plage horaire ou non, et affiche le panneau en tant qu'image non-opaque si un résultat de la détermination est affirmatif.

7. Appareil d'affichage de carte tridimensionnelle et d'objet selon la revendication 1,
où l'objet est un panneau de signalisation routière comprenant un panneau sur lequel est montré(e)/sont montrés un diagramme et/ou une chaîne de texte pour représenter visuellement une règle de trafic, de sorte que le diagramme et/ou la chaîne de texte corresponde/correspondent à la partie significative et le panneau corresponde à la partie non significative,
où le moyen de stockage stocke :
"non-opaque" comme étant l'attribut de transparence prédéterminé pour le panneau,
"opaque" comme étant l'attribut de transparence prédéterminé pour le diagramme et/ou la chaîne de texte, et
où le moyen d'affichage d'objet affiche le panneau en tant qu'image non-opaque, et le diagramme et/ou la chaîne de texte en tant qu'image opaque.

8. Appareil d'affichage de carte tridimensionnelle et d'objet selon la revendication 7,
où, pour le diagramme et/ou la chaîne de texte, le moyen de stockage stocke : l'attribut de transparence prédéterminé désignant "opaque", une plage horaire prédéterminée, et un attribut de transparence conditionnel désignant "non-opaque" qui ne devient valide que pendant la plage horaire, et
où le moyen d'affichage d'objet détermine si l'heure actuelle se trouve dans la plage horaire ou non, et affiche le diagramme et/ou la chaîne de texte en tant qu'image non-opaque si un résultat de la détermination est affirmatif.

9. Procédé d'affichage de carte tridimensionnelle et d'objet permettant d'afficher un objet pour transmettre visuellement des informations prédéterminées à un utilisateur en tant qu'image superposée sur une carte tridimensionnelle,
où l'objet comporte une pluralité de parties, la pluralité de parties comprenant une partie significative et une partie non significative,
où le procédé d'affichage de carte tridimensionnelle et d'objet comprend :
une étape de stockage qui consiste à stocker des informations de dessin et un attribut de transparence prédéterminé pour chaque partie, l'attribut de transparence désignant "opaque" ou "non-opaque" par rapport à un niveau de signification de la partie, où, pour la partie significative, le moyen de stockage stocke : l'attribut de transparence prédéterminé désignant "opaque", une condition prédéterminée, et un attribut de transparence conditionnel désignant "non-opaque" qui ne devient valide que sous la condition prédéterminée ;
une étape d'affichage de carte (S2) qui consiste à afficher la carte tridimensionnelle ; et
une étape d'affichage d'objet (S4, S8) qui consiste à exécuter un processus de dessin sur la base des informations de dessin et de l'attribut de transparence pour chaque partie stockés dans l'étape de stockage, ce qui permet d'afficher un objet en tant qu'image superposée sur la carte tridimensionnelle qui est affichée par l'étape d'affichage de carte, de sorte que la partie significative apparaisse comme une image opaque et la partie non significative apparaisse comme une image non-opaque, où le moyen d'affichage d'objet détermine (S67, S77) si la partie significative satisfait la condition ou non, et affiche la partie significative en tant qu'image non-opaque si un résultat de la détermination est affirmatif.

10. Programme d'affichage de carte tridimensionnelle et d'objet permettant de mettre en oeuvre le procédé d'affichage de carte tridimensionnelle et d'objet conformément à la revendication 9.

11. Appareil de navigation tridimensionnelle destiné à fournir une navigation par l'affichage d'un panneau de guidage de navigation en tant qu'image superposée sur une carte tridimensionnelle,
où le panneau de guidage de navigation comprend un panneau sur lequel est montré(e)/sont montrés un diagramme et/ou une chaîne de texte pour représenter visuellement un guidage de navigation,
où l'appareil de navigation tridimensionnelle comprend :
un moyen de stockage destiné à stocker : un attribut de transparence prédéterminé désignant "non-opaque" et des informations de dessin pour le panneau ; et un attribut de transparence prédéterminé désignant "opaque" et des informations de dessin pour le diagramme et/ou la chaîne de texte ;
un moyen d'affichage de carte (6, 9, S2) destiné à afficher la carte tridimensionnelle ; et
un moyen d'affichage de panneau de guidage de navigation (6, 9, S8) destiné à exécuter un processus de dessin sur la base des informations de dessin et de l'attribut de transparence stockés dans le moyen de stockage, ce qui permet d'afficher un panneau de guidage de navigation en tant qu'image superposée sur la carte tridimensionnelle qui est affichée par le moyen d'affichage de carte, de sorte que le diagramme et/ou la chaîne de texte apparaisse/apparaissent comme une image opaque et le panneau apparaisse comme une image non-opaque.

12. Appareil de navigation tridimensionnelle selon la revendication 11,
où le diagramme et/ou la chaîne de texte comprend/comprennent une pluralité de flèches représentant visuellement, respectivement, différentes voies,
où l'appareil de navigation tridimensionnelle comprend en outre un moyen de recherche (7, 9) destiné à rechercher un itinéraire optimal sur la base d'une position actuelle d'un véhicule, à déterminer une direction que le véhicule doit suivre, et à informer le moyen d'affichage de panneau de guidage de navigation de la direction,
où, pour chaque flèche, le moyen de stockage stocke : l'attribut de transparence prédéterminé désignant "opaque", une direction représentée par une flèche, et un attribut de transparence conditionnel désignant "non-opaque" qui ne devient valide que lorsque la direction que le véhicule doit suivre ne concorde pas avec la direction représentée par la flèche, et
où, pour chaque flèche, le moyen d'affichage de panneau de guidage de navigation détermine si la direction que le véhicule doit suivre ne concorde pas avec la direction représentée par la flèche ou non, et affiche toute dite flèche pour laquelle un résultat de la détermination est négatif en tant qu'image opaque, et toute dite flèche pour laquelle un résultat de la détermination est affirmatif en tant qu'image non-opaque.

13. Appareil de navigation tridimensionnelle selon la revendication 11, comprenant en outre un moyen de sélection (5) destiné à sélectionner l'une d'une pluralité desdites structures spéciales en tant qu'emplacement de destination,
où, pour le panneau, le moyen de stockage stocke : l'attribut de transparence prédéterminé désignant "opaque" et un attribut de transparence conditionnel désignant "non-opaque" qui ne devient valide que lorsque la structure spéciale est désélectionnée, et
où le moyen d'affichage d'objet affiche le panneau accompagnant toute dite structure spéciale qui est sélectionnée par le moyen de sélection pour être l'emplacement de destination en tant qu'image non-opaque, et le panneau accompagnant toute dite structure spéciale qui est désélectionnée en tant qu'image non-opaque.

14. Procédé de navigation tridimensionnelle destiné à fournir une navigation par l'affichage d'un panneau de guidage de navigation en tant qu'image superposée sur une carte tridimensionnelle,
où le panneau de guidage de navigation comprend un panneau sur lequel est montré(e)/sont montrés un diagramme et/ou une chaîne de texte pour représenter visuellement un guidage de navigation,
où le procédé de navigation tridimensionnelle comprend :
une étape de stockage qui consiste à stocker : un attribut de transparence prédéterminé désignant "non-opaque" et des informations de dessin pour le panneau ; et un attribut de transparence prédéterminé désignant "opaque" et des informations de dessin pour le diagramme et/ou la chaîne de texte ;
une étape d'affichage de carte (S2) qui consiste à afficher la carte tridimensionnelle ; et
une étape d'affichage de panneau de guidage de navigation (S8) qui consiste à exécuter un processus de dessin sur la base des informations de dessin et de l'attribut de transparence stockés dans l'étape de stockage, ce qui permet d'afficher un panneau de guidage de navigation en tant qu'image superposée sur la carte tridimensionnelle qui est affichée par l'étape d'affichage de carte, de sorte que le diagramme et/ou la chaîne de texte apparaisse/apparaissent comme une image opaque et le panneau apparaisse comme une image non-opaque.

15. Programme de navigation tridimensionnelle exécuté par un ordinateur compris dans un appareil permettant de fournir une navigation par l'affichage d'un panneau de guidage de navigation en tant qu'image superposée sur une carte tridimensionnelle,
où le panneau de guidage de navigation comprend un panneau sur lequel est montré(e)/sont montrés un diagramme et/ou une chaîne de texte pour représenter visuellement un guidage de navigation,
où le programme de navigation tridimensionnelle comprend
une étape de stockage qui consiste à stocker : un attribut de transparence prédéterminé désignant "non-opaque" et des informations de dessin pour le panneau ; et un attribut de transparence prédéterminé désignant "opaque" et des informations de dessin pour le diagramme et/ou la chaîne de texte ;
une étape d'affichage de carte (S2) qui consiste à afficher la carte tridimensionnelle ; et
une étape d'affichage de panneau de guidage de navigation (S8) qui consiste à exécuter un processus de dessin sur la base des informations de dessin et de l'attribut de transparence stockés dans l'étape de stockage, ce qui permet d'afficher un panneau de guidage de navigation en tant qu'image superposée sur la carte tridimensionnelle qui est affichée par l'étape d'affichage de carte, de sorte que le diagramme et/ou la chaîne de texte apparaisse/apparaissent comme une image opaque et le panneau apparaisse comme une image non-opaque.
